(19) Europäisches Patentamt
European Patent Office
Office européen des brevets

(11) **EP 1 743 201 B1**

(12) **EUROPEAN PATENT SPECIFICATION**

(45) Date of publication and mention
of the grant of the patent:
**14.10.2020 Bulletin 2020/42**

(51) Int Cl.:
***G02B 6/12*** *(2006.01)*

(21) Application number: **04775948.5**

(22) Date of filing: **05.05.2004**

(86) International application number:
**PCT/US2004/014084**

(87) International publication number:
**WO 2005/114288 (01.12.2005 Gazette 2005/48)**

(54) **ATHERMAL AWG AND AWG WITH LOW POWER CONSUMPTION USING GROOVE OF CHANGEABLE WIDTH**

ATHERMISCHES AWG UND AWG MIT GERINGEM STROMVERBRAUCH UNTER VERWENDUNG EINER ROLLE WECHSELBARER BREITE

AWG ATHERMIQUE ET AWG À FAIBLE CONSOMMATION UTILISANT UN SILLON DE LARGEUR VARIABLE

(84) Designated Contracting States:
**AT BE BG CH CY CZ DE DK EE ES FI FR GB GR HU IE IT LI LU MC NL PL PT RO SE SI SK TR**

(43) Date of publication of application:
**17.01.2007 Bulletin 2007/03**

(73) Proprietor: **NeoPhotonics Corporation**
**San Jose, CA 95134 (US)**

(72) Inventors:
• **COLE, Robert**
**Mt. Hamilton, California 95140 (US)**
• **GUERRERO, Michael**
**Morgan Hill, California 95037 (US)**
• **PURCHASE, Kenneth**
**Mountain View, California 94043 (US)**
• **TICKNOR, Anthony J.**
**Cupertino, California 95014 (US)**
• **McGREER, Kenneth**
**Livermore, California 94550 (US)**
• **MENCHE, David**
**Redwood City, California 94061 (US)**
• **ASCANIO, Peter D.**
**Fremont, California 94539 (US)**

(74) Representative: **Arth, Hans-Lothar et al**
**ABK Patent Attorneys**
**Jasminweg 9**
**14052 Berlin (DE)**

(56) References cited:
**US-A1- 2001 033 714      US-A1- 2002 097 961**
**US-A1- 2003 190 131      US-B1- 6 238 805**
**US-B1- 6 603 916          US-B2- 6 668 116**

## Description

### Field of the Invention

The present invention relates to the art of optical integrated circuits and more particularly to apparatus and methods for providing arrayed waveguides having a center wavelength that is independent of temperature.

### Background of the Invention

Optical integrated circuits (OICs) come in many forms such as 1xN optical splitters, optical switches, wavelength division multiplexers (WDMs), demultiplexers, optical add/drop multiplexers (OADMs), and the like. Such OICs are employed in constructing optical networks in which light signals are transmitted between optical devices for carrying data. For instance, traditional signal exchanges within telecommunications networks and data communications networks using transmission of electrical signals via electrically conductive lines are being replaced with optical fibers and circuits through which optical (e.g., light) signals are transmitted. Such optical signals may carry data or other information through modulation techniques, for transmission of such information through an optical network. OICs allow branching, coupling, switching, separating, multiplexing and demultiplexing of optical signals without intermediate transformation between optical and electrical media.

Such optical circuits include planar lightwave circuits (PLCs) having optical waveguides on flat substrates, which can be used for routing optical signals from one of a number of input optical fibers to any one of a number of output optical fibers or optical circuitry. PLCs make it possible to achieve higher densities, greater production volume and more diverse functions than are available with fiber components through employment of manufacturing techniques typically associated with the semiconductor industry. For instance, PLCs contain optical paths known as waveguides formed on a silicon wafer substrate using lithographic processing, wherein the waveguides are made from transmissive media, which have a higher index of refraction than the chip substrate or the outlying cladding layers in order to guide light along the optical path. By using advanced photolithographic and other processes, PLCs are fashioned to integrate multiple components and functionalities into a single optical chip.

An important application of PLCs in particular and OICs generally involves wavelength-division multiplexing (WDM) including dense wavelength-division multiplexing (DWDM). DWDM allows optical signals of different wavelengths, each carrying separate information, to be transmitted via a single optical channel or fiber in an optical network. Current multiplexed optical systems employ as many as 160 wavelengths on each optical fiber.

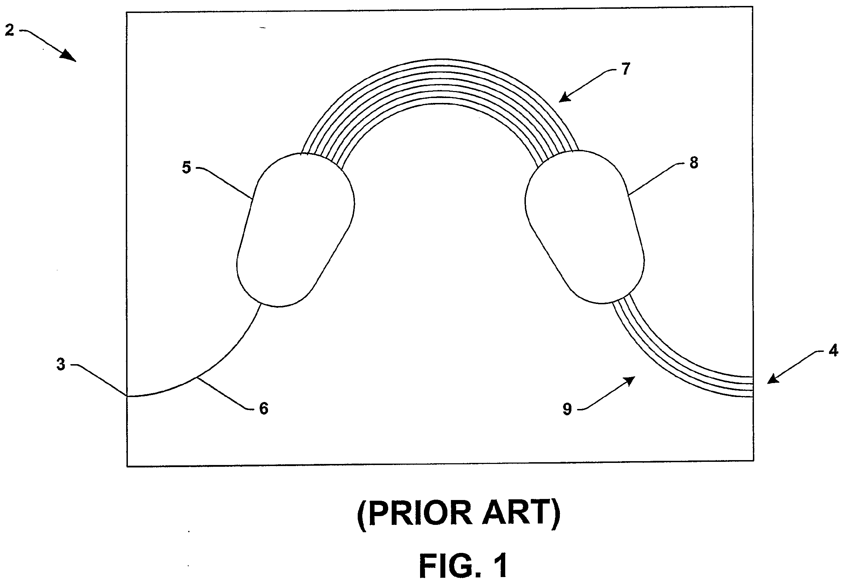

In order to provide advanced multiplexing and demultiplexing (e.g., DWDM) and other functions in such networks, arrayed-waveguide gratings (AWGs) have been developed in the form of PLCs. Existing AWGs can provide multiplexing or demultiplexing of up to 80 channels or wavelengths spaced as close as 50GHz. As illustrated in Fig. 1, a conventional demultiplexing AWG 2 includes a single input port 3, and multiple output ports 4. Multiple wavelength light is received at the input port 3 (e.g., from an optical fiber in a network, not shown) and provided to an input lens 5 via an input optical path or waveguide 6.

The input lens 5 spreads the multiple wavelength light into an array of waveguides 7, sometimes referred to a waveguide grating. Each of the waveguides 7 has a different optical path length from the input lens 5 to an output lens 8, resulting in a different phase tilt at the input to the output lens 8 depending on wavelength. This phase tilt, in turn, affects how the light recombines in the output lens 8 through constructive interference. The output lens 8 thus provides different wavelengths at the output ports 4 via individual output waveguides 9, whereby the AWG 2 can be employed in demultiplexing light signals entering the input port 6 into two or more demultiplexed signals at the output port 4. The AWG 2 can alternatively be used to multiplex light signals from the ports 4 into a multiplexed signal having two or more wavelength components at the port 3.

A problem with OICs, such as the conventional AWG 2 of Fig. 1 is temperature sensitivity. Since the waveguide material usually has a temperature dependent refractive index, the channel wavelengths of multi/demultiplexer shift as the temperature varies. This shift is typically of the order of 0.01 nm/E° C in silica-based devices and 0.1 nm/E° C in InP based devices. This wavelength shift can result in a loss of signal and/or cross talk in communication system(s) employing the AWG 2. As communication system(s) are designed with increasingly smaller channel spacing, even a small temperature dependent wavelength shift can have a significant effect on system performance. Presently, AWGs must have active stabilization of the device operating temperature in order to perform acceptably. This stabilization is typically achieved by the addition of resistive heaters, temperature sensors, active electronics, and in some cases also thermo-electric coolers. Even though an AWG is a passive filter, currently it requires significant electronics and a few watts of power to operate effectively.

US 6,668,116 B2 discloses an arrayed waveguide grating type optical multiplexer/deplexer which eliminates the temperature dependency of the light transmission center wavelenghts and surppresses an increase in insertion loss with a simple configuration even under the conditions of high temperature and hight humidity. US 6,668,116 B2 further discloses a waveguide forming area comprising an optical input waveguide, a first slab waveguide, an arrayed waveguide formed of a plurality of channel waveguides arranged side by side having different lenght each other, and a plurality of optical output waveguides connected one by one is formed on a substrate

## Summary of the Invention

The following presents a simplified summary of the invention in order to provide a basic understanding of some aspects of the invention. This summary is not an extensive overview of the invention. It is intended to neither identify key or critical elements of the invention nor delineate the scope of the invention. Rather, the sole purpose of this summary is to present some concepts of the invention in a simplified form as a prelude to the more detailed description that is presented hereinafter.

The present invention provides athermal optical integrated circuits and methods for athermalizing optical integrated circuits mitigating and/or overcoming the shortcomings associated with conventional optical integrated circuits) and other devices. The invention further comprises methods for fabricating OICs and for mitigating temperature sensitivity utilizing a groove and an actuator. Markedly lower power consumption also results from employing temperature responsive mechanical actuators in another aspect of the present invention. The present invention also provides OIC apparatuses and methods for mechanical beam steering mitigating and/or overcoming the shortcomings associated with conventional OICs and other devices. The invention further involves methods for fabricating OICs and for mitigating temperature sensitivity utilizing actuators for mechanical beam steering in OICs.

According to an aspect of the present invention, an optical integrated circuit is provided that contains a base containing a first region and a second region separated by a hinge, and an AWG chip over the base, where a groove traverses one or more of one of the lenses and the waveguide grating, and an actuator connecting the first region and the second region of the base. The base and actuator have different thermal expansion coefficients. The actuator expands and/or contracts with temperature changes causing the first region and at least a portion of the AWG chip thereover to move with respect to the portion of the AWG chip over the second region. Thus, wavelength shift associated with waveguide temperature dependent refractive index can be mitigated. The groove is filled with an index matching substance selected from an adhesive, a gel or a polymer. According to an aspect of the present disclosure, optical integrated circuit is provided that contains an AWG chip with a groove traversing one or more of the lenses and the waveguide grating. The AWG chip contains a first region and a second region connected by a hinge and separated by the groove. An actuator connects the first region and the second region of the AWG chip. The AWG chip substrate and actuator have different thermal expansion coefficients. The actuator expands and/or contracts with temperature changes causing the first region of the AWG chip to move with respect to the second region. Thus, wavelength shift associated with waveguide temperature dependent refractive index can be mitigated.

Another aspect of the invention provides a methodology for fabricating an OIC capable of mitigating wavelength shift associated with waveguide temperature dependent refractive index. Fabrication of the OIC includes forming a groove in the AWG chip so that an actuator can induce relative movement between different portions of the chip in response to temperature changes.

According to another aspect of the present invention, actuators are provided having a first actuator body part with a first coefficient of thermal expansion coupled to a second actuator body part with a second coefficient of thermal expansion. Another aspect of the present invention provides for actuators to be employed with OICs. The OICs include a first region having a waveguide, a second region having a waveguide and a connecting region coupled to the first region and the second region. The connecting region can comprise a first lens that optically couples the waveguide of the first region to the waveguide of the second region. The actuator is located adjacent to the first region, for example, to facilitate mechanical beam steering.

Yet another aspect of the invention provides a methodology for fabricating an OIC. The method comprises providing a base, forming at least one waveguide in a first region, forming at least one waveguide in a second region and forming a connecting region comprising a first lens coupling the at least one waveguide of the first region to the at least one waveguide of the second region. The first region and the second region are then scroll-diced from each other such that remaining mechanical continuity is generally provided through the connecting region. Thereafter, an actuator is placed in between the first region and the second region.

To the accomplishment of the foregoing and related ends, certain illustrative aspects of the invention are described herein in connection with the following description and the annexed drawings. These aspects are indicative, however, of but a few of the various ways in which the principles of the invention may be employed and the present invention is intended to include all such aspects and their equivalents. Other advantages and novel features of the invention will become apparent from the following detailed description of the invention when considered in conjunction with the drawings.

## Brief Summary of the Drawings

Fig. 1 is a schematic top plan view of a conventional AWG multiplexer/demultiplexer device.
Fig. 2 is a schematic top plan view of a base or riser in accordance with one aspect of the present invention.
Fig. 3 is a schematic top plan view of an OIC in accordance with one aspect of the present invention.

Fig. 4 is a cross-sectional view of the OIC of Fig. 3.

Fig. 5 is a schematic top plan view of another base or riser in accordance with one aspect of the present invention.

Fig. 6 is a schematic top plan view of another OIC in accordance with one aspect of the present invention.

Fig. 7 is a schematic top plan view of yet another base or riser in accordance with one aspect of the present invention.

Fig. 8 is a schematic top plan view of yet another OIC in accordance with one aspect of the present invention.

Fig. 9 is a schematic top plan view of still yet another base or riser in accordance with one aspect of the present invention.

Fig. 10 is a schematic top plan view of still yet another OIC in accordance with one aspect of the present invention.

Fig. 11 is a schematic top plan view of another base or riser in accordance with one aspect of the present invention.

Fig. 12 is a schematic top plan view of another OIC in accordance with one aspect of the present invention.

Fig. 13 is a schematic top plan view of an AWG chip in accordance with one aspect of the present invention.

Fig. 14 is a schematic top plan view of another AWG chip in accordance with one aspect of the present invention.

Fig. 15 is a schematic top plan view of an OIC in accordance with one aspect of the disclosure.

Fig. 16 is a schematic top plan view of another OIC in accordance with one aspect of the disclosure.

Fig. 17 is a schematic top plan view of yet another OIC in accordance with one aspect of the disclosure.

Fig. 18 is a schematic top plan view of still yet another OIC in accordance with one aspect of the disclosure.

Fig. 19 is a graph plotting change in CW (y axis) versus change in temperature (x axis) for a conventional AWG that is not temperature stabilized and an AWG in accordance with one aspect of the present invention.

Fig. 20 is a schematic top plan view of an exemplary OIC.

Fig. 21 is a cross section view of the OIC of Fig. 20.

Fig. 22 is a perspective view of an exemplary actuator in accordance with an aspect of the present invention.

Fig. 23 is a cross-section view of a component of an actuator in accordance with an aspect of the present invention.

Fig. 24 is schematic top plan view of the OIC of Fig. 20 employing the actuator of Fig. 22 in accordance with an aspect of the present invention.

Fig. 25 is a perspective view of an actuator in accordance with an aspect of the present invention.

Fig. 26 is a perspective view of an actuator in accordance with an aspect of the present invention.

Fig. 27 is a schematic top plan view of an actuator in accordance with an aspect of the present invention.

Fig. 28 is a schematic top plan view of an actuator in accordance with an aspect of the present invention.

Fig. 29 is a cross section view of an OIC employing the actuator of Fig. 28 in accordance with an aspect of the present invention.

Fig. 30 is a schematic top plan view of an actuator in accordance with an aspect of the present invention.

Fig. 31 is a cross section view of an actuator in accordance with an aspect of the present invention.

Fig. 32 is a schematic top plan view of the actuator of Fig. 31.

Fig. 33 is a cross section view an actuator in accordance with an aspect of the present invention.

Fig. 34 is a schematic top plan view of the actuator of Fig. 33.

Fig. 35 is a schematic top plan view of an OIC employing an actuator in accordance with an aspect of the present invention.

Fig. 36 is a top cross section view of the OIC with the actuator of Fig. 35.

Fig. 37 is a schematic top plan view of an OIC employing an actuator in accordance with an aspect of the present invention.

Fig. 38 is a schematic top plan view of an OIC employing an actuator in accordance with an aspect of the present invention.

Fig. 39 is a cross section view of the OIC with the actuator of Fig. 38.

Fig. 40 is a cross section view of an OIC employing an actuator in accordance with an aspect of the present invention.

Fig. 41 is a schematic view of an actuator in accordance with an aspect of the present invention.

Fig 42 is a schematic top view of an OIC employing a wedge in accordance with an aspect of the present invention.

## Detailed Description of the Invention

The various aspects of the present invention will now be described with reference to the drawings, wherein like reference numerals are used to refer to like elements throughout. The invention provides for mitigation of temperature sensitivity of optical integrated circuits by employing mechanical beam steering.

The present invention provides athermal OICs and OICs with low power consumption by employing beam deflection, using an OIC or AWG having two or more distinct regions or pieces that can move relative to one another. This relative movement causes shifts in the center wavelength (CW), or wavelength of peak transmission for a given channel, of the OIC that are proportional to the motion of the two pieces. The OIC is designed such that the degree of CW change caused by the motion of the two pieces is equal in magnitude and opposite in sign to the CW change inherent in the OIC (as caused by expansion/contraction of the OIC and dependencies of waveguide refractive index upon temperature) then the device has approximately zero net dependence of CW upon temperature, having a center wavelength that is substantially independent of temperature, and is thus termed athermal.

As the temperature of an OIC increases or decreases, the index of refraction of one or more region waveguide(s) may change. In order to compensate for this temperature based index of refraction change, the actuator expands/contracts as a result of the temperature change, causing the edges of the AWG chip in the groove to move (e.g., rotate). The movement (rotation) caused by temperature changes corresponds to or compensates for the temperature-change induced wavelength shifts in the waveguide(s) due to temperature dependant refractive index. As such, wavelength shift associated with waveguide temperature dependent refractive index change can be mitigated. Thus, loss of signal and/or cross talk in communication system(s) employing the OIC can be reduced.

Generally speaking, an AWG chip is positioned over a base. The base has a hinge separating and connecting a first region and a second region of the base. The hinge connects the first region and second region yet permits the first region and second region of the base to move relative to one another. Typically, the hinge is a relatively narrow strip of the base (or AWG substrate as described below). An actuator is connected to the first region and second region of the base, and expansion/contraction of the actuator may induce movement of the first and second regions about the hinge. The actuator and the base have different thermal expansion coefficients. A groove or gap is formed in the AWG chip in a position at least approximately over the hinge. One portion or piece of the AWG chip on one side of the groove is over and supported by the first region of the base while the other portion or piece of the AWG chip on the other side of the groove is over and supported by the second region of the base. Thus, movement of the first and second regions about the hinge induced by the expansion/contraction of the actuator causes the two portions or pieces of the AWG chip to move relative to one another.

Alternatively, the actuator connects the two portions or pieces of the AWG chip and expansion/contraction of the actuator may induce movement of the two portions or pieces of the AWG chip relative one another. The actuator and the AWG chip substrate have different thermal expansion coefficients. The base is constructed in such a manner so as to permit such movement between portions or pieces of the AWG chip (such as described above).

Still alternatively, the above described mechanism can be applied to a structure containing about half of the AWG chip, but equipped with a mirror. In such a structure, a groove is formed by positioning the waveguide grating or lens close to the mirror, but not directly affixed to the mirror (to permit movement). The actuator and the AWG chip/mirror substrate have different thermal expansion coefficients.

Although AWG chips containing an waveguide grating are discussed at length, the OIC may contain a Mach-Zehnder interferometer. In this case, the groove traverses the arms or waveguides of the Mach-Zehnder device.

The width of the groove in the AWG chip, or the width between the AWG chip and a mirror (hereinafter also referred to as a groove) is sufficient to permit movement so as to shift the CW. In one embodiment, the width of groove is about 1 micron or more and about 50 microns or less. In another embodiment, the width of groove is about 3 microns or more and about 30 microns or less. In yet another embodiment, the width of groove is about 5 microns or more and about 25 microns or less. In still yet another embodiment, the width of groove is about 7 microns or more and about 20 microns or less. The AWG chip may contain more than one groove. The groove or gap may be straight, curved, have a symmetric shape, or a asymmetric shape as it traverses the lens, waveguide grating, or is adjacent a mirror. In embodiments where the groove is asymmetric, the width of the groove as it traverses the lens or waveguide grating may vary yet remain within the width parameters described above. At widths over 50 microns, insertion loss concerns start to become significant.

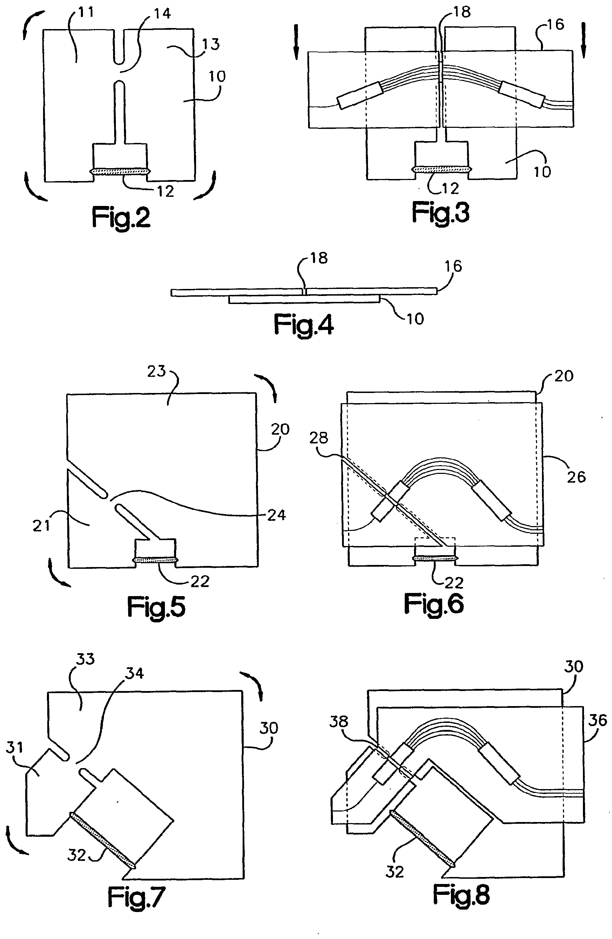

The difference in thermal expansion coefficients between the actuator and the base, between the actuator and the AWG chip substrate, or between actuator and the AWG chip/mirror substrate is sufficient to induce relative movement of the two portions or pieces of the AWG chip by expansion/contraction of the actuator. In one embodiment, the difference in thermal expansion coefficients (for example, between the actuator and the base) is at least about 25%. In another embodiment, the difference in thermal expansion coefficients is at least about 100% (in other words the actuator can be at least twice the value of the base). In yet another embodiment, the difference in thermal expansion coefficients is at least about 200% (in other words the actuator can be at least three times the value of the base). In one embodiment, an athermal OIC contains an AWG chip mounted over a base or a riser with hinge positioned under the waveguide grating, such as under the center portion of the waveguide grating. For example, referring to Figs. 2 to 4, an example of such an OIC, and a method of fabricating the OIC, is shown.

Specifically referring to Fig. 2, a base 10, sometimes referred to as a riser, is provided. The base 10 is configured to contain a hinge 14 separating and connecting a first region 11 and a second region 13. The base is made of a material having a first thermal expansion coefficient. The base can be made of a metal, metal alloy, or hard plastic material. Examples of metals include one or more of aluminum, brass, bronze, chromium, copper, gold, iron, magnesium, nickel, palladium, platinum, silver, stainless steel, tin, titanium, tungsten, zinc, zirconium, Hastelloy®, Kovar®, Invar, Monel®, Inconel®, and the like.

An actuator 12 having a second thermal expansion coefficient, different from the first thermal expansion coefficient of the base 10 is provided connecting the first region 11 and the second region 13 of the base 10. The base can bend due to the hinge 14. That is, the first region 11 and the second region 13 may rotate about the hinge 14 consistent with the arrows.

The actuator 12 can be made of one or more of a metal such as aluminum, brass, bronze, chromium, copper, gold, iron, magnesium, nickel, palladium, platinum, silver, stainless steel, tin, titanium, tungsten, zinc, zirconium, Hastelloy®, Kovar®, Invar, Monel®, Inconel®, a ceramic material such as alumina or aluminum silicate, a polymeric material such as silicone rubber or an elastomer, polycarbonates, polyolefins, polyamides, polyesters, liquid crystal polymers, polymer composite materials (polymer combined with carbon fiber, graphite, or fiberglass), and the like. An example of a polymer composite is DuPont's Zytel® fiberglass reinforced Nylon. The actuator 12 may alternatively be a mechanical assembly containing a number of different materials designed to have, as a whole, a specific thermal expansion coefficient (different from that of the base 10).

The mechanical actuator 12 may alternatively be a piezoelectric element, an electrostrictive actuator, solenoid, electric motor such as a servo motor, linear motor, or stepper motor, or resistively heated thermal expanding member. When the actuator 12 is one of a piezoelectric element, solenoid, electric motor, or resistively heated thermal expanding member, one or more temperature sensors may be placed within the waveguide grating connected to a feedback loop that is connected to the actuator (a controller and/or processor may be also included in the feedback loop). Temperature changes detected by the sensor lead to a signal which is sent to the controller/processor that in turn leads to mechanical actuation of the actuator. In another embodiment, an actuator or block is described in co-pending U.S. Serial No. 09/999,692 filed October 24, 2001 now U.S. Patent 6,603,892 entitled "Mechanical Beam Steering for Optical Integrated Circuits" along with related concepts, which is incorporated herein by reference.

Referring to Fig. 3, an AWG chip 16 is affixed to the base 10 by any suitable means. For example, an adhesive such as an UV curable adhesive can be positioned between the AWG chip 16 and the base 10. The AWG chip 16 is shown having a substrate, an input waveguide, a first lens, a second lens, a waveguide grating between the two lenses containing a plurality of waveguides, and output waveguides. The substrate of the AWG chip 16 can be made of one or more of silica, silicon, InP, GaAs, and the like. The input waveguide, the waveguide grating, and the output waveguide can be independently made of one or more of lithium niobate (LiNbO3) or other inorganic crystals, doped silica, undoped silica, glass, thermo-optic polymers, electro-optic polymers, and semiconductors such as indium phosphide (InP). Cladding layers may surround the various waveguides. It is noted that the actuator 12 may be attached to the base 10 before or after the AWG chip 16 is affixed to the base 10. Although not shown, the AWG chip 16 and/or base 10 can be cut to minimize the length of the groove 18; that is, to greatly increase the width of groove in locations where it does not traverse the waveguide grating (or lens as described below).

In this embodiment, the AWG chip 16 is positioned over the base so that the waveguide grating is directly above the hinge 14 of the base 10. A gap or groove 18 is formed in the AWG chip 16 traversing the waveguide grating. The groove 18 goes all the way through the AWG chip 16 vertically, and may or may not divide the AWG chip 16 into two distinct pieces. The AWG chip is diced in any suitable manner including using a dicing saw, water jet cutting, chemical etching, laser-wafer-cutter, wire-saw, EDM, and the like. One portion of the AWG chip 16 on one side of the groove 18 is supported by the first region 11 of the base 10 while another portion of the AWG chip 16 on the other side of the groove 18 is supported by the second region 13 of the base 10.

Referring to Figure 4, a side view of the structure of Figure 3 is shown along the arrows in Figure 3. The gap 18 is completely through the AWG chip 16 in a vertical orientation. The gap 18 is located at or near the center of the grating, or at or near a perpendicular angle to the waveguides of the grating. Although the interior edges of the AWG chip 16 within the groove 18 are shown as perpendicular to the surface of base 10, the groove 18 may optionally be formed so that it is at a small angle to a line normal to the base surface in order to mitigate back reflection of light as the light crosses the groove 18. For example, the groove 18 may be formed at an angle of about 5° or more and about 15° or less to a line normal to the base surface.

Within the gap or groove 18, a waveplate (not shown), such as a half waveplate, may be optionally formed. Additionally or alternatively, the gap or groove 18 is filled with an adhesive, or polymer having an index of refraction that substantially matches that of the waveguides of the waveguide grating. The effect depends only weakly on the refractive index of the index matching substance, so that tight control of the substance's refractive index is not necessary. As disclosed herein, the interior facing edges of the AWG chip 16 (in the groove 18) can be coated with an antireflection film and remain exposed to air.

As the temperature of the structure changes, the actuator 12 changes length at a different rate than the base 10, due to differences in the coefficients of thermal expansion. This causes a change in the angle between the two regions of the AWG (on either side of the groove 18), and causes a different phase delay for different waveguides in the waveguide grating, and thus causes a shift in the CW of the device. The actuator and base material size and shape are chosen such that the CW shift caused by the thermal expansion/contraction of the actuator exactly balances the CW shift in the AWG due to change in temperature. As a result, the AWG CW is independent of temperature. The amount of pre-bias put on the actuator also can be tuned to tune in the correct CW for the AWG.

In another embodiment, an athermal OIC contains an AWG chip mounted over a base or a riser with hinge positioned under one of the lenses. For example, referring to Figs. 5 to 8, examples of such OICs, and methods of fabricating the OICs, are shown.

Specifically referring to Fig. 5, a base 20 is provided. The base 20 is configured to contain a hinge 24 separating and connecting a first region 21 and a second region 23. The base is made of a material having a first thermal expansion coefficient. An actuator 22 having a second thermal expansion coefficient, different from the first thermal expansion coefficient of the base 20 is provided connecting the first region 21 and the second region 23 of the base 20. The base can bend due to the hinge 24. That is, the first region 21 and the second region 23 may rotate about the hinge 24 consistent with the arrows.

Referring to Fig. 6, an AWG chip 26 is affixed to the base 20 by any suitable means. For example, an adhesive can be positioned between the AWG chip 26 and the base 20. The AWG chip 26 is shown having a substrate, an input waveguide, a first lens, a second lens, a waveguide grating between the two lenses containing a plurality of waveguides, and output waveguides. The base 20, substrate, actuator 22, and waveguides can be made of any of the materials for these features described in connection with Figs. 2 and 3. It is noted that the actuator 22 may be attached to the base 20 before or after the AWG chip 26 is affixed to the base 20.

In this embodiment, the AWG chip 26 is positioned over the base so that one of the lenses is directly above the hinge 24 of the base 20. A gap or groove 28 is formed in the AWG chip 26 traversing the lens. The groove 28 may be formed in the middle of the lens, near the input/output waveguides side of the lens, or near the waveguide grating side of the lens. The groove 28 goes all the way through the AWG chip 26 vertically, and may or may not divide the AWG chip 26 into two distinct pieces. The groove is formed in any suitable manner including using a dicing saw, water jet cutting, chemical etching, laser-wafer-cutter, wire-saw, EDM, and the like. One portion of the AWG chip 26 on one side of the groove 28 is supported by the first region 21 of the base 20 while another portion of the AWG chip 26 (containing the waveguide grating) on the other side of the groove 28 is supported by the second region 23 of the base 20.

The gap or groove 28 is filled with an adhesive, gel or polymer having an index of refraction that substantially matches that of the lens. The effect depends only weakly on the refractive index of the index matching substance, so that tight control of the substance's refractive index is not necessary. As disclosed herein the interior facing edges of the AWG chip 26 (in the groove 28) can be optionally coated with an antireflection film and remain exposed to air.

As the temperature of the structure changes, the actuator 22 changes length at a different rate than the base 20, due to differences in the coefficients of thermal expansion. This causes a change in the angle between the two regions of the AWG (on either side of the groove 28), in particular between two regions of the lens traversed by the groove 28, and deflection of part of the lens and the input (our output) waveguide to move the waveguide relative to the focus point of the light, thus shifting which wavelengths are focused into the waveguide grating, and thus causes a shift in the CW of the device. The actuator and base material size and shape are chosen such that the CW shift caused by the thermal expansion/contraction of the actuator exactly balances the CW shift in the AWG due to change in temperature. As a result, the AWG CW is independent of temperature. The amount of pre-bias put on the actuator also can be tuned to tune in the correct CW for the AWG.

Specifically referring to Fig. 7, a base 30 is provided. The base 30 is configured to contain a hinge 34 separating and connecting a first region 31 and a second region 33. The base is made of a material having a first thermal expansion coefficient. An actuator 32 having a second thermal expansion coefficient, different from the first thermal expansion coefficient of the base 30 is provided connecting the first region 31 and the second region 33 of the base 30. The base can bend due to the hinge 34. That is, the first region 31 and the second region 33 may rotate about the hinge 34 consistent with the arrows. In this embodiment, the shape of the base 30 is tailored to the shape of the AWG chip 36 described below.

Referring to Fig. 8, an AWG chip 36 is affixed to the base 30 by any suitable means. For example, an adhesive can be positioned between the AWG chip 36 and the base 30. The AWG chip 36 is tailored to the arrayed waveguide grating thereon. The AWG chip 36 is shown having a substrate, an input waveguide, a first lens, a second lens, a waveguide grating between the two lenses containing a plurality of waveguides, and output waveguides. The base 30, substrate, actuator 32, and waveguides can be made of any of the materials for these features described in connection with Figs. 2 and 3. It is noted that the actuator 32 may be attached to the base 30 before or after the AWG chip 36 is affixed to the base 30.

In this embodiment, the AWG chip 36 is positioned over the base so that one of the lenses is directly above the hinge 34 of the base 30. A gap or groove 38 is formed in the AWG chip 36 traversing the lens. The groove 38 goes all the way through the AWG chip 36 vertically, and may or may not divide the AWG chip 36 into two distinct pieces. The groove is formed in any suitable manner including using a dicing saw, water jet cutting, chemical etching, laser-wafer-cutter, wire-saw, EDM, and the like. One portion of the AWG chip 36 on one side of the groove 38 is supported by the first region 31 of the base 30 while another portion of the AWG chip 36 (containing the waveguide grating) on the other side of the groove 38 is supported by the second region 33 of the base 30. The shape of the AWG chip 36 may be tailored so that substrate that is not near any one of the input/output waveguides, lenses, waveguide grating is eliminated, and/or so as to allow proper space for the installation of the actuator. Notches, bosses, and the like can be formed to facilitate attachment of the actuator. For example, AWG chip 36 of Fig. 8 has a tailored shape whereas AWG chip 26 of Fig. 6 does not.

The gap or groove 38 is filled with an adhesive, gel or polymer having an index of refraction that substantially matches that of the lens. The effect depends only weakly on the refractive index of the index matching substance, so that tight control of the substance's refractive index is not necessary. As disclosed herein, the interior facing edges of the AWG chip 36 (in the groove 38) can be optionally coated with an antireflection film and remain exposed to air.

As the temperature of the structure changes, the actuator 32 changes length at a different rate than the base 30, due to differences in the coefficients of thermal expansion. This causes a change in the angle between the two regions of the AWG (on either side of the groove 38), in particular between two regions of the lens traversed by the groove 38, and deflection of part of the lens and the input (our output) waveguide to move the waveguide relative to the focus point of the light, thus shifting which wavelengths are focused into the waveguide grating, and thus causes a shift in the CW of the device. The actuator and base material size and shape are chosen such that the CW shift caused by the thermal expansion/contraction of the actuator exactly balances the CW shift in the AWG due to change in temperature. As a result, the AWG CW is independent of temperature. The amount of pre-bias put on the actuator also can be tuned to tune in the correct CW for the AWG.

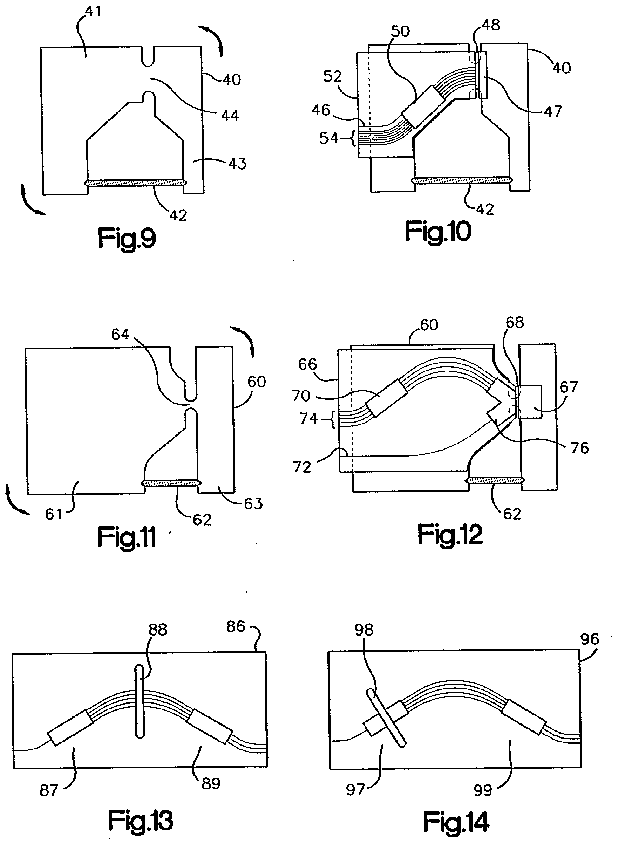

In yet another embodiment, an athermal OIC contains an AWG chip mounted over a base or a riser with hinge positioned under the waveguide grating and a mirror. For example, referring to Figs. 9 and 10, an example of such an OIC, and a method of fabricating the OIC, is shown.

Specifically referring to Fig. 9, a base 40 is provided. The base 40 is configured to contain a hinge 44 separating and connecting a first region 41 and a second region 43. An actuator 42 having a second thermal expansion coefficient, different from the first thermal expansion coefficient of the base 40 is provided connecting the first region 41 and the second region 43 of the base 40. The base can bend due to the hinge 44. That is, the first region 41 and the second region 43 may rotate about the hinge 44 consistent with the arrows.

Referring to Fig. 10, an AWG chip 46 and a mirror 47 are affixed to the base 40 by any suitable means. For example, an adhesive can be positioned between the AWG chip 46 or mirror 47 and the base 40. The AWG chip 46 is shown having a substrate, an input waveguide 52, a lens 50, a waveguide grating between the lens and the mirror 47 containing a plurality of waveguides, and output waveguides 54. The base 40, substrate, actuator 42, and waveguides can be made of any of the materials for these features described in connection with Figs. 2 and 3. The AWG chip 46 and mirror 47 are positioned so that a groove or gap 48 exists therebetween. The mirror 47 functions to reflect back light from the waveguide grating into the waveguide grating. It is noted that the actuator 42 may be attached to the base 40 before or after the AWG chip 46 is affixed to the base 40.

In this embodiment, the AWG chip 46 and mirror 47 are positioned over the base 40 so that the waveguide grating and mirror 47 are directly above the hinge 44 of the base 40. A gap or groove 48 traverses the waveguide grating. The groove 48 completely separates the AWG chip 46 from the mirror 47. The AWG chip 46 is on one side of the groove 48 and is supported by the first region 41 of the base 40 while the mirror 47 is on the other side of the groove 48 and is supported by the second region 43 of the base 40.

Within the gap or groove 48, a waveplate (not shown), such as a quarter waveplate, may be optionally formed. Additionally or alternatively, the gap or groove 48 is filled with an adhesive, gel or polymer having an index of refraction that substantially matches that of the waveguides of the waveguide grating. The effect depends only weakly on the refractive index of the index matching substance, so that tight control of the substance's refractive index is not necessary. As disclosed herein, the interior facing edge of the AWG chip 46 (in the groove 48) can be polished or coated with an antireflection film and remain exposed to air.

As the temperature of the structure changes, the actuator 42 changes length at a different rate than the base 40, due to differences in the coefficients of thermal expansion. This causes a change in the angle between the AWG and the mirror 47, and causes a different phase delay for different waveguides in the waveguide grating, and thus causes a shift in the CW of the device. In particular, the angle at which the mirror is attached is used to select the AWG CW, and the degree of rotation of the mirror provided by the actuator as a function of temperature is used to cancel the AWG=s thermal response. The actuator and base material size and shape are chosen such that the CW shift caused by the thermal expansion/contraction of the actuator exactly balances the CW shift in the AWG due to change in temperature. As a result, the AWG CW is independent of temperature. The amount of pre-bias put on the actuator also can be tuned to tune in the correct CW for the AWG.

In still yet another embodiment, an athermal OIC contains an AWG chip mounted over a base or a riser with hinge positioned under a lens and a mirror. For example, referring to Figs. 11 and 12, an example of such an OIC, and a method of fabricating the OIC, is shown.

Specifically referring to Fig. 11, a base 60 is provided. The base 60 is configured to contain a hinge 64 separating and connecting a first region 61 and a second region 63. An actuator 62 having a second thermal expansion coefficient, different from the first thermal expansion coefficient of the base 60 is provided connecting the first region 61 and the second region 63 of the base 60. The base can bend due to the hinge 64. That is, the first region 61 and the second region 63 may rotate about the hinge 64 consistent with the arrows.

Referring to Fig. 12, an AWG chip 66 and a mirror 67 are affixed to the base 60 by any suitable means. For example, an adhesive can be positioned between the AWG chip 66 or mirror 67 and the base 60. The AWG chip 66 is shown having a substrate, an input waveguide 72, a first lens 70, a second lens 76 that is folded, a waveguide grating between the first lens 70 and the folded lens 76 containing a plurality of waveguides, and output waveguides 74. The base 60, substrate, actuator 62, and waveguides can be made of any of the materials for these features described in connection with Figs. 2 and 3. The AWG chip 66 and mirror 67 are positioned so that a groove or gap 68 exists therebetween. The mirror 67 functions to reflect back light from the folded lens 76 into the folded lens 76 so that it may enter the waveguide grating. It is noted that the actuator 62 may be attached to the base 60 before or after the AWG chip 66 is affixed to the base 60.

In this embodiment, the AWG chip 66 and mirror 67 are positioned over the base 60 so that the folded lens 76 and mirror 67 are directly above the hinge 64 of the base 60. A gap or groove 68 traverses the lens 76. The groove 68 completely separates the AWG chip 66 from the mirror 67. The AWG chip 66 is on one side of the groove 68 and is supported by the first region 61 of the base 60 while the mirror 67 is on the other side of the groove 68 and is supported by the second region 63 of the base 60.

The gap or groove 68 may be optionally polished, and is filled with an adhesive, gel or polymer having an index of refraction that substantially matches that of the waveguides of the waveguide grating. The effect depends only weakly on the refractive index of the index matching substance, so that tight control of the substance's refractive index is not necessary. As disclosed herein the interior facing edge of the AWG chip 66 (in the groove 68) can be optionally coated with an antireflection film and remain exposed to air.

As the temperature of the structure changes, the actuator 62 changes length at a different rate than the base 60, due to differences in the coefficients of thermal expansion. This causes a change in the angle between the lens 76 and the mirror 67, and deflection of part of the lens and the input (our output) waveguide to move the waveguide relative to the focus point of the light, thus shifting which wavelengths are focused into the waveguide grating, and thus causing a shift in the CW of the device. In particular, the angle at which the mirror is attached is used to select the AWG CW, and the degree of rotation of the mirror provided by the actuator as a function of temperature is used to cancel the AWG=s thermal response. The actuator and base material size and shape are chosen such that the CW shift caused by the thermal expansion/contraction of the actuator exactly balances the CW shift in the AWG due to change in temperature. As a result, the AWG CW is independent of temperature.

The groove or gap may be formed in the AWG chip before or after mounting the AWG chip on the base. Referring to Fig. 13, an AWG chip 86 suitable for mounting on the base of Fig. 2 is shown. The AWG chip 86 is shown having a substrate, an input waveguide, a first lens, a second lens, a waveguide grating between the two lenses containing a plurality of waveguides, and output waveguides. A gap or groove 88 is formed in the AWG chip 86 traversing the waveguide grating, but not the entire chip. The AWG chip 86 is positioned over the base so that the waveguide grating is directly above the hinge 14 (referring to Fig. 2) of the base 10. If not already formed, a gap or groove 88 is formed in the AWG chip 86 traversing the waveguide grating, but not the entire chip. The groove 88 goes all the way through the AWG chip 86 vertically, but does not divide the AWG chip 86 into two distinct pieces. The groove 88 is formed in any suitable manner including wet etching or RIE. One portion 87 of the AWG chip 86 on one side of the groove 88 is supported by the first region 11 of the base 10 while another portion 89 of the AWG chip 86 on the other side of the groove 88 is supported by the second region 13 of the base 10.

The AWG chip 86 and base (underneath the chip) are then simultaneously cut in any suitable manner, such as using a waterjet, wire saw, laser, and the like, to provide a structure similar to Fig. 3 except that the AWG chip 86 substantially superimposes the base. The cutting tailors the shape of the structure around the functional features of the AWG chip 86 and in particular near the groove 88 so that the groove 88 separates the AWG chip 86 into two distinct pieces and the portions of the AWG chip 86 above and below the groove 88 no longer hold the chip in a single piece. An actuator is then added connecting the two regions of the base or two pieces of the chip.

Within the gap or groove 88, a waveplate (not shown), such as a half waveplate, may be optionally formed. Additionally or alternatively, the gap or groove 88 may filled with an adhesive, gel, polymer or liquid having an index of refraction that substantially matches that of the waveguides of the waveguide grating.

Referring to Fig. 14, an AWG chip 96 suitable for mounting on the base of Fig. 7 is shown. The AWG chip 96 is shown having a substrate, an input waveguide, a first lens, a second lens, a waveguide grating between the two lenses containing a plurality of waveguides, and output waveguides.

In this embodiment, the AWG chip 96 is positioned over the base so that one of the lenses is directly above the hinge 24 of the base 20 (referring to Fig. 5). A gap or groove 98 is formed in the AWG chip 96 traversing the lens before or after attaching the chip to the base. The groove 98 goes all the way through the AWG chip 96 vertically, but does not divide the AWG chip 96 into two distinct pieces. The groove 98 is formed in any suitable manner. One portion 97 of the AWG chip 96 on one side of the groove 98 is supported by the first region 21 of the base 20 while another portion 99 of the AWG chip 96 (containing the waveguide grating) on the other side of the groove 98 is supported by the second region 23 of the base 20.

The AWG chip 96 and base (underneath the chip) are then simultaneously cut in any suitable manner, such as using a waterjet, wire saw, laser, and the like, to provide a structure similar to Fig. 8 except that the AWG chip 96 substantially superimposes the base. The cutting tailors the shape of the structure around the functional features of the AWG chip 96 and in particular near the groove 98 so that the groove 88 separates the AWG chip 96 into two distinct pieces and the portions of the AWG chip 96 above and below the groove 88 no longer hold the chip in a single piece. An actuator is then added connecting the two regions of the base or two pieces of the chip.

The gap or groove 98 is filled with an adhesive, gel or polymer having an index of refraction that substantially matches that of the lens. As disclosed herein, the interior facing edges of the AWG chip 96 (in the groove 98) can be coated with an antireflection film and remain exposed to air.

Although Figs. 2 to 8 show AWG chips with a groove that completely separates the AWG chip into two pieces, the groove may alternatively separate the AWG chip into two regions. In another general embodiment, an AWG chip may be provided with a hinge, a gap or groove forming two regions in the AWG chip, and an actuator connecting the two regions of the AWG chip separated and connected by the hinge, and optionally affixed to a conventional base or a base as described in one or more of Figs. 2, 5, 7, 9, and 11. If a base is employed, the base must allow for movement of the AWG chip induced by the actuator about the hinge. Since the OIC chip is not in two distinct pieces, a base is not necessary,

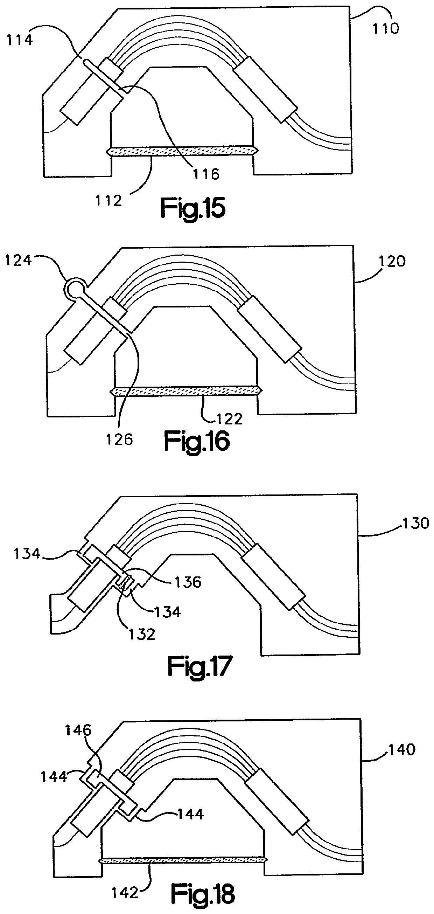

Referring to Fig. 15, according to an aspect of the disclosure an AWG chip 110 is shown having a substrate, an input waveguide, a first lens, a second lens, a waveguide grating between the two lenses containing a plurality of waveguides, and output waveguides. An actuator 112 connects two regions of the chip, divided by a groove116. The AWG chip 110 contains a hinge 114. The substrate, actuator 112, and waveguides can be made of any of the materials for these features described in connection with Figs. 2 and 3.

The gap or groove 116 is formed in the AWG chip 110 traversing one or more of the lenses. The groove 116 goes all the way through the AWG chip 110 vertically. The groove 116 is formed in any suitable manner including using a dicing saw, water jet cutting, chemical etching, laser-wafer-cutter, wire-saw, EDM, and the like. In this embodiment, chemical etching such as reactive ion etching (RIE) is preferred. Although not shown, the groove 116 may traverse the waveguide grating instead of the lens, and the hinge 114 would be positioned visually above the waveguide grating.

Within the gap or groove 116, a waveplate (not shown), such as a half waveplate, may be optionally formed, particularly when the groove traverses the waveguide grating. Additionally or alternatively, the gap or groove 116 may filled with an adhesive, gel, polymer or liquid having an index of refraction that substantially matches that of the lens. Still alternatively, the interior facing edges of the AWG chip 110 (in the groove 116) can be coated with an antireflection film and remain exposed to air.

As the temperature of the structure changes, the actuator 112 changes length at a different rate than the substrate of the AWG chip 110, due to differences in the coefficients of thermal expansion. This causes a change in the angle between the two regions of the AWG (on either side of the groove 116), in particular between two regions of the lens traversed by the groove 116, and deflection of part of the lens and the input (our output) waveguide to move the waveguide relative to the focus point of the light, thus shifting which wavelengths are focused into the waveguide grating, and thus causes a shift in the CW of the device. The actuator and base material size and shape are chosen such that the CW shift caused by the thermal expansion/contraction of the actuator exactly balances the CW shift in the AWG due to change in temperature. As a result, the AWG CW is independent of temperature. The amount of pre-bias put on the actuator also can be tuned to tune in the correct CW for the AWG.

Referring to Fig. 16, according to an aspect of the disclosure an AWG chip 120 is shown having a substrate, an input waveguide, a first lens, a second lens, a waveguide grating between the two lenses containing a plurality of waveguides, and output waveguides. An actuator 122 connects two regions of the chip, divided by a groove126. The AWG chip 120 contains a hinge 124. The substrate, actuator 122, and waveguides can be made of any of the materials for these features described in connection with Figs. 2 and 3.

The gap or groove 126 is formed in the AWG chip 120 traversing one or more of the lenses. The groove 126 goes all the way through the AWG chip 120 vertically. The groove 126 is formed in any suitable manner including using a dicing saw, water jet cutting, chemical etching, laser-wafer-cutter, wire-saw, EDM, and the like. In this embodiment, chemical etching such as reactive ion etching (RIE) is preferred. Although not shown, the groove 126 may traverse the waveguide grating instead of the lens, and the hinge 124 would be positioned visually above the waveguide grating.

Within the gap or groove 126, a waveplate (not shown), such as a half waveplate, may be optionally formed, particularly when the groove traverses the waveguide grating. Additionally or alternatively, the gap or groove 126 may filled with an adhesive, gel, polymer or liquid having an index of refraction that substantially matches that of the lens. Still alternatively, the interior facing edges of the AWG chip 120 (in the groove 126) can be coated with an antireflection film and remain exposed to air.

As the temperature of the structure changes, the actuator 122 changes length at a different rate than the substrate of the AWG chip 120, due to differences in the coefficients of thermal expansion. This causes a change in the angle between the two regions of the AWG (on either side of the groove 126), in particular between two regions of the lens traversed by the groove 126, and deflection of part of the lens and the input (our output) waveguide to move the waveguide relative to the focus point of the light, thus shifting which wavelengths are focused into the waveguide grating, and thus causes a shift in the CW of the device. The actuator and base material size and shape are chosen such that the CW shift caused by the thermal expansion/contraction of the actuator exactly balances the CW shift in the AWG due to change in temperature. As a result, the AWG CW is independent of temperature. The amount of pre-bias put on the actuator also can be tuned to tune in the correct CW for the AWG.

Referring to Fig. 17, according to an aspect of the disclosure an AWG chip 130 is shown having a substrate, an input waveguide, a first lens, a second lens, a waveguide grating between the two lenses containing a plurality of waveguides, and output waveguides. An actuator 132 connects two regions of the chip, divided by a groove136. The AWG chip 130 contains two hinges 134. The substrate, actuator 132, and waveguides can be made of any of the materials for these features described in connection with Figs. 2 and 3.

The gap or groove 136 is formed in the AWG chip 130 traversing one or more of the lenses. The groove 136 goes all the way through the AWG chip 130 vertically. The groove 136 is formed in any suitable manner including using a dicing saw, water jet cutting, chemical etching, laser-wafer-cutter, wire-saw, EDM, and the like. In this embodiment, chemical etching such as reactive ion etching (RIE) is preferred. Although not shown, the groove 136 may traverse the waveguide grating instead of the lens, and the hinges 134 would be positioned visually above and below the waveguide grating.

Within the gap or groove 136, a waveplate (not shown), such as a half waveplate, may be optionally formed, particularly when the groove traverses the waveguide grating. Additionally or alternatively, the gap or groove 136 may filled with an adhesive, gel, polymer or liquid having an index of refraction that substantially matches that of the lens. Still alternatively, the interior facing edges of the AWG chip 130 (in the groove 136) can be coated with an antireflection film and remain exposed to air.

As the temperature of the structure changes, the actuator 132 changes length at a different rate than the substrate of the AWG chip 130, due to differences in the coefficients of thermal expansion. This causes a change in the angle between the two regions of the AWG (on either side of the groove 136), in particular between two regions of the lens traversed by the groove 136, and deflection of part of the lens and the input (our output) waveguide to move the waveguide relative to the focus point of the light, thus shifting which wavelengths are focused into the waveguide grating, and thus causes a shift in the CW of the device. The actuator and base material size and shape are chosen such that the CW shift caused by the thermal expansion/contraction of the actuator exactly balances the CW shift in the AWG due to change in temperature. As a result, the AWG CW is independent of temperature. The amount of pre-bias put on the actuator also can be tuned to tune in the correct CW for the AWG.

Referring to Fig. 18, according to an aspect of the disclosure an AWG chip 140 is shown having a substrate, an input waveguide, a first lens, a second lens, a waveguide grating between the two lenses containing a plurality of waveguides, and output waveguides. An actuator 142 connects two regions of the chip, divided by a groove146. The AWG chip 140 contains two hinges 144. The substrate, actuator 142, and waveguides can be made of any of the materials for these features described in connection with Figs. 2 and 3.

The gap or groove 146 is formed in the AWG chip 140 traversing one or more of the lenses. The groove 146 goes all the way through the AWG chip 130 vertically. The groove 146 is formed in any suitable manner including using a dicing saw, water jet cutting, chemical etching, laser-wafer-cutter, wire-saw, EDM, and the like. In this embodiment, chemical etching such as reactive ion etching (RIE) is preferred. Although not shown, the groove 146 may traverse the waveguide grating instead of the lens, and the hinges 144 would be positioned visually above and below the waveguide grating.

Within the gap or groove 146, a waveplate (not shown), such as a half waveplate, may be optionally formed, particularly when the groove traverses the waveguide grating. Additionally or alternatively, the gap or groove 136 may filled with an adhesive, gel, polymer or liquid having an index of refraction that substantially matches that of the lens. Still alternatively, the interior facing edges of the AWG chip 140 (in the groove 146) can be coated with an antireflection film and remain exposed to air.

As the temperature of the structure changes, the actuator 142 changes length at a different rate than the substrate of the AWG chip 140, due to differences in the coefficients of thermal expansion. This causes a change in the angle between the two regions of the AWG (on either side of the groove 146), in particular between two regions of the lens traversed by the groove 146, and deflection of part of the lens and the input (our output) waveguide to move the waveguide relative to the focus point of the light, thus shifting which wavelengths are focused into the waveguide grating, and thus causes a shift in the CW of the device. The actuator and base material size and shape are chosen such that the CW shift caused by the thermal expansion/contraction of the actuator exactly balances the CW shift in the AWG due to change in temperature. As a result, the AWG CW is independent of temperature. The amount of pre-bias put on the actuator also can be tuned to tune in the correct CW for the AWG.

In some embodiments of Figs. 15 to 18, when a polymer occupies the groove traversing a lens or waveguide grating (or between a mirror and an AWG chip), if the polymer has a desired coefficient of thermal expansion, that is different from the coefficient of thermal expansion of the AWG chip 110 substrate, the polymer may function as an actuator.

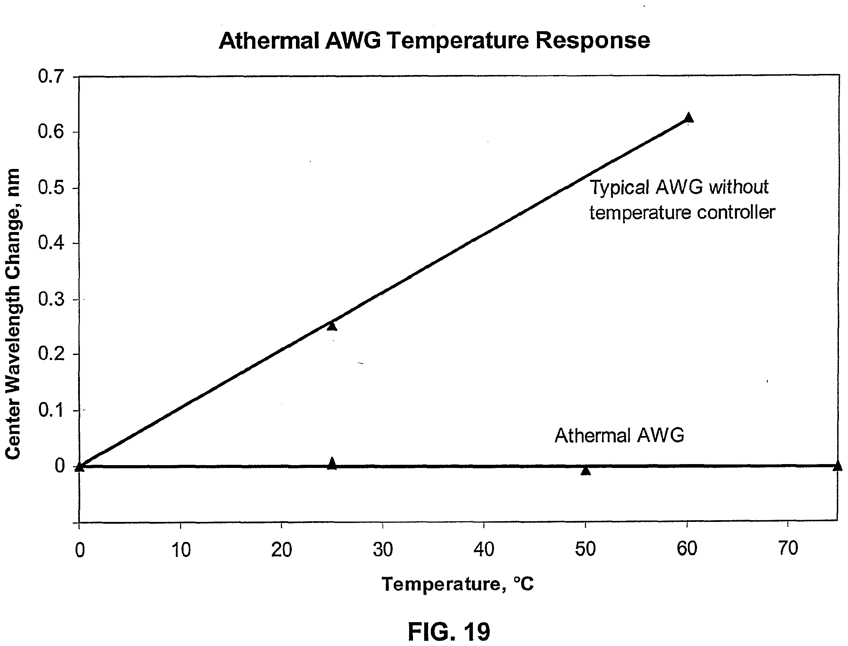

Referring to Fig. 19, a graph showing the different CW changes/responses to temperature for a conventional AWG that is not temperature stabilized and an athermal AWG made in accordance with the present invention. As the graph indicates, as the temperature increases, the CW of the conventional AWG increasingly changes. On the contrary, as the temperature increases, the CW of the athermal AWG made in accordance with the present invention remains substantially constant.

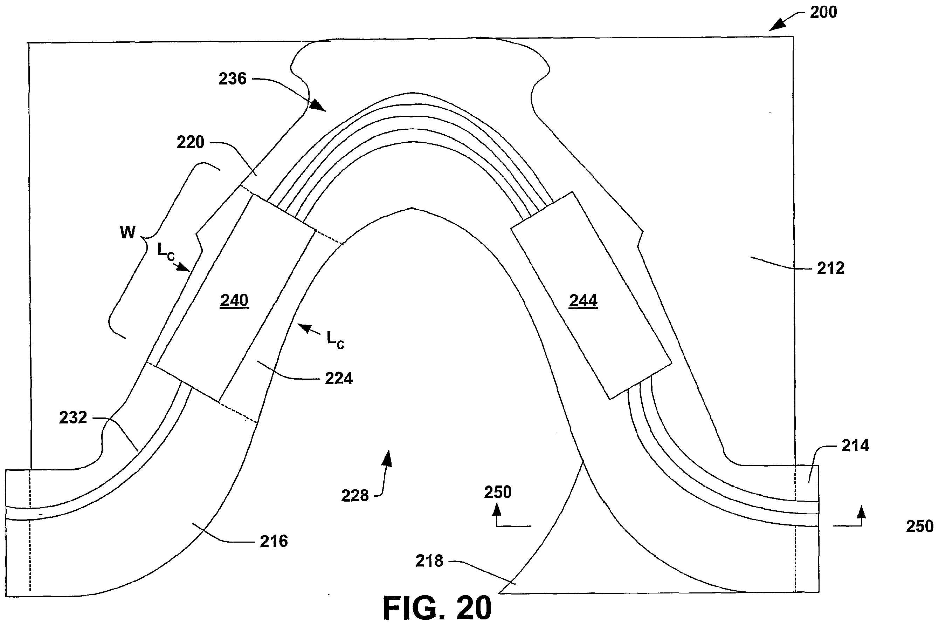

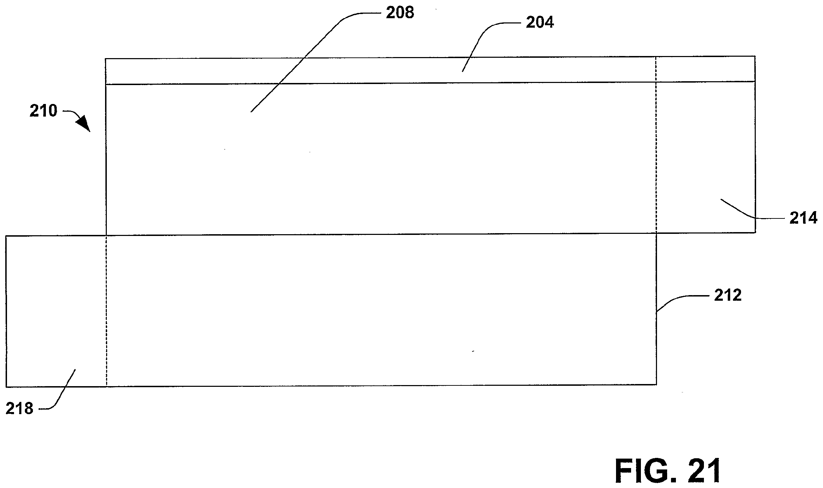

Referring to Figs. 20 and 21, an exemplary optical integrated circuit (OIC) 200 is illustrated. The OIC 200 includes one or more optical layers 204, for example, deposited on a substrate 208. The optical layers 204 and the substrate 208 can be collectively referred to as the chip 210. The optical layers 204 can be coextensive (e.g., have substantially the same spatial boundaries) with the substrate 208. The optical layers 204 are capable of transmitting light in a controlled manner. The optical layers 204 can comprise layer(s) of silica and the substrate 208 can comprise a portion of a silicon wafer.

The OIC 200 can further include a chip carrier 212. The chip carrier 212 can be coextensive with the chip 210 in particular region(s) and/or not coextensive in other region(s). For example, in a chip extensive region 214, the chip 210 physically extends beyond the chip carrier 212. In a carrier extensive region 218, the chip carrier 212 physically extends beyond the chip 210. The chip extensive region 214 can be used, for example, to facilitate attachment of optical fiber(s) to the chip 210.

The optical layers 204 include a first region 216, a second region 220 and a connecting region 224. For example, scroll-dicing (e.g. using a water-jet, laser-wafer-cutter and/or wire-saw) may be employed to mechanically isolate the first region 216 and the second region 220 leaving a monolithic connection through the connecting region 224 and forming a gap 228 generally between the first region 216 and the second region 220. In one example, the chip carrier 212 is coextensive with the optical layers 204 in the area of the gap 228. In another example, the chip carrier 212 is not coextensive with the optical layers 204 in the area of the gap 228. In yet a third example, the chip carrier 212 is coextensive with the optical layers 204 in some portions of the gap 228 and not coextensive with the optical layers 204 in other portions of the gap 228.

The first region 216 can include first region waveguide(s) 232 (e.g., optical waveguide(s) and/or slab waveguide(s)). The second region 220 can include second region waveguide(s) 236 (e.g., optical waveguide(s) and/or slab waveguide(s)). The connecting region 224 can comprise a first lens 240. The first lens 240 can spread light from the first region waveguide(s) 232 to the second region waveguide(s) 236. Alternatively, the first lens 240 can focus light from the second region waveguide(s) 236 to the first region waveguide(s) 232. Optionally, the OIC 200 can include a second lens 244.

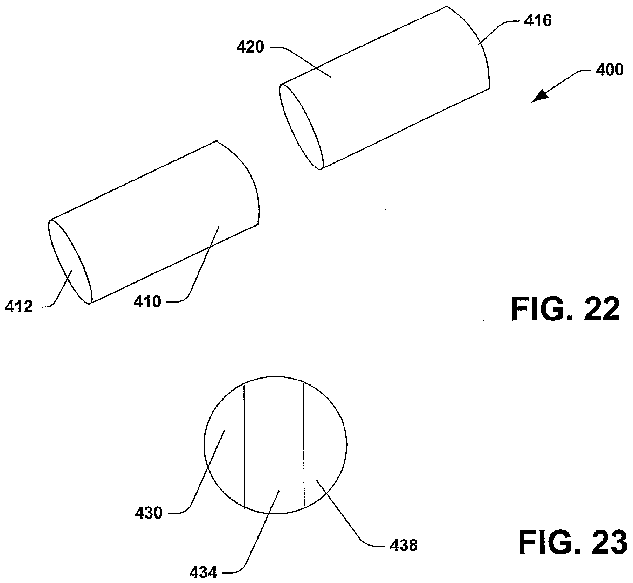

Referring briefly to Fig. 21, a cross sectional view taken along the line 250-250 of the OIC of Fig. 20 is illustrated. Turning next to Fig. 22, an exemplary actuator 400 in accordance with an aspect of the present invention is illustrated. The actuator 400 includes a first actuator body part 410 and a second actuator body part 420. The actuator 400 expands and/or contracts with temperature changes. In one embodiment, it is desirable to have the expansion and/or contraction of the actuator 400 to be substantially linear with temperature over a range of temperatures that is specified as the "operating temperature range" (change of length in the actuator 400 has a substantially linear relationship with change in temperature). In another embodiment, the actuator 400 applies a force over the operating temperature range of an OIC.

In accordance with an aspect of the present invention, the actuator 400 can be employed as a component of an OIC to facilitate mechanical beam steering mitigating and/or overcoming the shortcomings associated with conventional optical integrated circuit(s) and other devices. For example, the actuator 400 can be employed in an OIC in order to mitigate temperature sensitivity of the OIC. The actuator 400 has a first end 412 and a second end 416. Although AWG chips containing an waveguide grating are discussed at length, the OIC may contain a Mach-Zehnder interferometer.

The first actuator body part 410 and/or the second actuator body part 408 can be made of one or more of a metal such as aluminum, brass, bronze, chromium, copper, gold, iron, magnesium, nickel, palladium, platinum, silver, stainless steel, tin, titanium, tungsten, zinc, zirconium, Hastelloy®, Kovar®, Invar, Monel®, Inconel®, a ceramic material such as alumina or aluminum silicate, a polymeric material such as silicone rubber or an elastomer, a polyamide composite such as Zytel® or fiberglass reinforced nylon, polycarbonate, polyolefin, polyester, cross-linked polymer such as silicone rubber, PEEK, a polymer composite material (*e.g.*, carbon fiber, graphite and/or glass fiber), a liquid crystal polymer and the like.

The first actuator body part 410 has a first coefficient of thermal expansion. Similarly, the second actuator body part 408 has a second coefficient of thermal expansion. In one example, the first coefficient of thermal expansion is substantially similar to the second coefficient of thermal expansion. In another example, the first coefficient of thermal expansion is greater than the second coefficient of thermal expansion. In yet a third example, the first coefficient of thermal expansion is less than the second coefficient of thermal expansion.

When employed as part of an OIC 200, the force that is applied by the actuator 400 can be in a direction that tends to widen the gap 228, in which case the actuator 400 is in a state of compression and is referred to herein as a "compressive-state actuator". Alternatively, the force that is applied can be in a direction that tends to narrow the gap 228, in which case the actuator 400 is in a state of tension and is referred to herein as a "tensile-state" actuator. For an actuator 400 that is in a state of compression, the actuator maintains a force (*e.g.,* between 210 and 220) at its minimum temperature of operation if its length is large enough so that it does not lose contact (*e.g.*, with either the first region 216 or a second region of contact) at its minimum temperature of operation. It should also maintain contact (*e.g.*, with both regions) at the minimum specified storage temperature of the device. Because the length of the actuator 400 can have a narrow tolerance and the width of the gap 228 can be subject to fabrication variance(s), it can be advantageous for the actuator 400 to have an adjustable length, $L_A$, so that it can be adjusted to meet requirements of a particular AWG (*e.g.*, after the gap 228 has been cut into the AWG).

Furthermore, the actuator length, $L_A$, can be adjusted to provide the passband of a particular channel of the AWG with the desired center-wavelength (CW). This adjustment can be used to correct for fabrication variation(s) in the optical properties of the materials that can lead to a slight discrepancy between the desired CW (*e.g., as* designed) and the CW as manufactured. A third advantage of having an adjustable length is that the installation process can be simplified. Installing the actuator 400 while it has its final desired length can be difficult because at that length it will be exerting a force (*e.g.*, between regions). Thus, it may be preferable to temporarily make the actuator 400 shorter than the desired final length while it is inserted into the gap 228 and subsequently lengthened to the desired final length such that the force (*e.g.*, between regions) takes effect only as the actuator 400 is lengthened. In addition, for a particular OIC geometry (*e.g.*, cut-out), it can be difficult to calculate *a priori* the value of the CTE of the actuator 400 that is required to provide the degree of beam steering that cancels the effect that the change of temperature has on the refractive index of the materials. For this reason, it can be useful for the actuator 400 to have a value of CTE that can be adjusted between the maximum and minimum estimates of the required values.

The first actuator body part 410 is coupled to the second actuator body part 420. For example, the first actuator body part 410 can be coupled to the second actuator body part 420 by welding, crimping, gluing, fusing and/or other suitable manner of coupling. While the first actuator body part 410 and the second actuator body part 420 are depicted as cylindrical in Fig. 22, it is to be appreciated that any suitable shape for the first actuator body part 410 and/or the second actuator body part 420 can be employed with the present invention.

Referring briefly to Fig. 23, in one embodiment, the second actuator body part 420 comprises three component parts 430, 434, 438. The three component parts 430, 434, 438 can comprise suitable materials with similar or different coefficients of thermal expansion. In one example, one component part 430 and another component part 438 comprise a first material having a first coefficient of thermal expansion and the second component part 434 comprises a second material having a second coefficient of thermal expansion. The component parts 430, 434, 438 can be coupled (*e.g.*, spot-welded) at appropriate location(s) to effect an appropriate overall coefficient of thermal expansion of the second actuator body part 420 and/or the actuator 400.

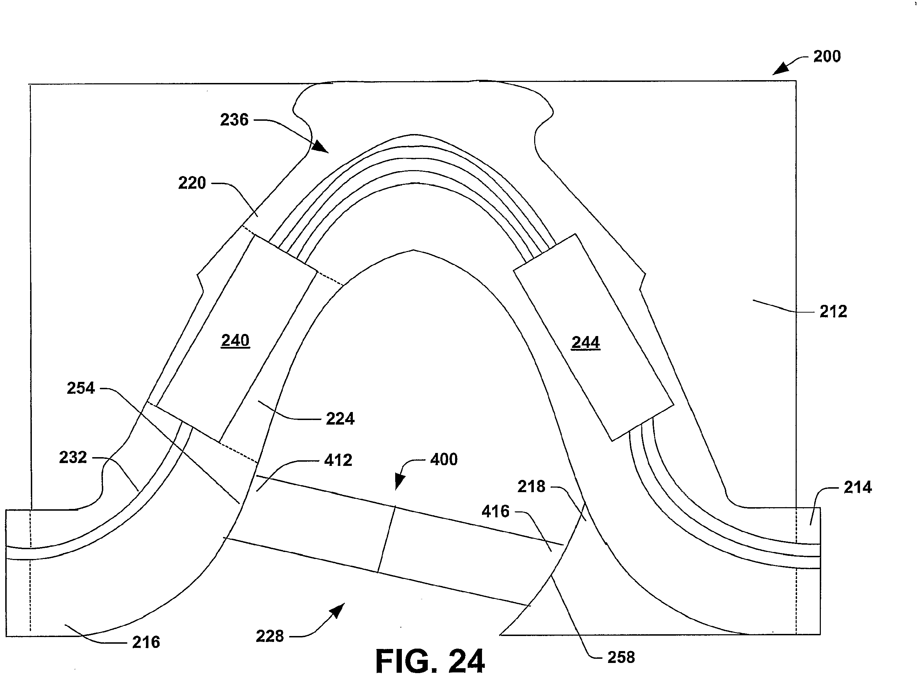

Referring next to Fig. 24, the OIC of Fig. 20 employing the actuator 400 in accordance with an aspect of the present invention is illustrated. For example, the actuator 400 can be included generally within the gap 228. The actuator 400 expands and/or contracts with temperature changes causing the first region 216 and/or at least a portion of the connecting region 224 to move with respect to the second region 220. The actuator 400 can be held in place (*e.g.*, kinematically and/or with an adhesive).

Carrier extensive region(s) can be designed to facilitate installation of the actuator 400. In one example, the chip carrier 212 can be configured with a first contact region 254 which comprises a portion of the first region 210 and a portion of the chip carrier 212. In this example, at about first contact region 254, a portion of the first region 210 and a portion of the chip carrier 212 can make physical contact with the actuator 400. In another example, the chip carrier 212 can be configured with a second contact region 258 which can be chip extensive. The first end 412 can make contact with the first contact region 254 and the second end 416 can make contact with the second contact region 258.

In one embodiment, the actuator 400 causes the first region 216 to move about 0.5 micron or more and about 100 microns or less respect to the second region 220 in response to temperature changes within the normal operating range of the device (*e.g.*, in the range of about -20° C to about +95° C). In another embodiment, the actuator 400 causes the first region 216 to move about 5 microns or more and about 50 microns or less with respect to the second region 220. In a third embodiment, the actuator 400 causes the first region 216 to move about 10 microns or more and about 25 microns or less with respect to the second region 220. In another embodiment, the actuator 400 changes length by about 0.01 micron or more and about 10 microns or less per ° C temperature change. In another embodiment, the actuator 400 changes length by about 0.1 micron or more and about 5 microns or less per ° C temperature change. In another embodiment, the actuator 400 changes length by about 0.2 micron or more and about 2 microns or less per ° C temperature change.

In one example, the connecting region 224 deforms sufficiently to accommodate the rotation of the first region 216 relative to the second region 220. It is to be appreciated that the first region 216 and/or the second region 220 may also deform to some extent; however, in this example, it is preferable for the relative rotation to be primarily accommodated by the deformation in the connecting region 224 (e.g., it is preferable for the connecting region 224 to deform to a larger extent than the first region 216 or the second region 220). To facilitate deformation of the connecting region 224, the connecting region 224 can be designed and/or manufactured to be as narrow as possible without obstructing the propagation of light through it and for the first region 216 and the second region to be substantially wider than the connecting region 224.

Referring briefly to Fig. 20, in one example, a cross section of the connecting region 224 has a lateral dimension, $L_C$, that is generally less than the nominal width of the connecting region 224, W. Accordingly, flexing due to external force, such as from an actuator as further described below, is permitted. In one embodiment, the lateral dimension $L_C$ of the cross section of the connecting region 224 is about 10 micron or more and about 10000 microns or less. In another embodiment, the lateral dimension $L_C$ of the cross section of the connecting region 224 is about 100 microns or more and about 5000 microns or less. In yet a third embodiment, the lateral dimension $L_C$ of the cross section of the connecting region 224 is about 500 microns or more and about 2000 microns or less.

Furthermore, it is to be appreciated that the first region 216, the connecting region 224 and the second region 220 can have any suitable geometry. For example, multiple wavelength light can be received at an input port (not shown) (e.g., from an optical fiber in a network) and transported via the first region waveguide(s) 232 and provided to the first lens 240. The first lens 240 can process (e.g., spread) the multiple wavelength light into the second region waveguide(s) 226 (e.g., arrayed waveguide grating arms). The second region waveguide(s) 236 can then provide the multiple wavelength light to output port(s) (not shown).

As the temperature of the OIC 200 increases, the index of refraction of the first region waveguide(s) 232 and/or the index of refraction of the second region waveguide(s) 236 may change. In order to compensate for this temperature based index of refraction change, the actuator 200 expands as a result of the temperature change, causing the first region 216 and/or at least a portion of the connecting region 224 to move (e.g., rotate) with respect to the second region 220. Similarly, as the temperature of the OIC 200 decreases, the actuator 400 contracts causing the first region 216 and/or at least a portion of the connecting region 224 to move (e.g., rotate) with respect to the second region 220. It is believed that the movement (rotation) caused by temperature changes corresponds to or compensates for the temperature-change induced wavelength shifts in the first region and/or second region waveguide(s) 232, 236 due to temperature dependant refractive index. As such, wavelength shift associated with waveguide temperature dependent refractive index change can be mitigated. Thus, loss of signal and/or cross talk in communication system(s) employing the OIC 200 can be reduced.

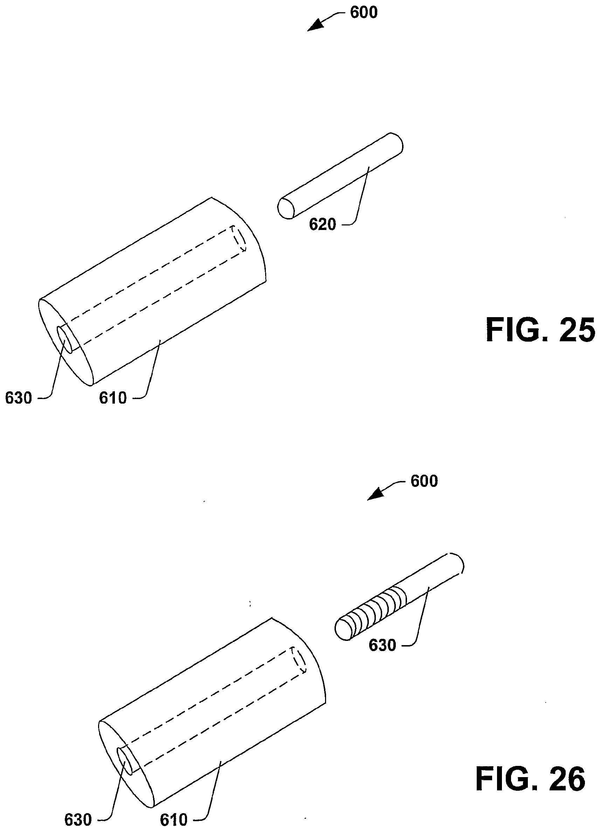

Turning next to Fig. 25, an embodiment of an actuator 600 in accordance with an aspect of the present invention is illustrated. The actuator 600 includes a first actuator body part 610 and a second actuator body part 620. The first actuator body part 610 includes a boring 630 through at least part of the first actuator body part 610. The first actuator body part 610 has a first coefficient of thermal expansion. The second actuator body part 620 has a second coefficient of thermal expansion. In this embodiment, the second actuator body part 620 is inserted into at least a portion of the boring 630 of the first actuator body part 610 to facilitate coupling of the first actuator body part 610 and the second actuator body part 620. Once a desired amount of the second actuator body part 620 has been inserted into the boring 630, the first actuator body part 610 and the second actuator body part 620 can be coupled together by any suitable means, for example, by welding, crimpling, gluing and/or fusing.

Further, operating characteristics (e.g., overall tension and/or compression) of the actuator 600 can be based, at least in part, upon the amount of the second actuator body party 620 inserted into the boring 630. For example, if the first coefficient of thermal expansion is different than the second coefficient of thermal expansion, the overall thermal characteristics of the actuator 600 is based, at least in part, upon the amount of second actuator body part 620 inserted into the boring 630.

In one example, the first actuator body part 610 comprises an aluminum tube and the second actuator body part 620 comprises a steel rod. The first actuator body party 610 (steel rod) is inserted inside the second actuator body part 620 (aluminum tube) and the length of the second actuator body part 620 (aluminum tube) is adjusted by pulling an end of the actuator 600 until it is a desired length. The second actuator body part 620 (aluminum tube) is then crimped at a desired location to facilitate coupling of the first body part 610 to the second actuator body part 620.

Referring briefly to Fig. 26, another embodiment of the actuator 600 depicted in Fig. 25 is illustrated. In this embodiment, at least a portion of the boring 630 of the first body part 610 is provided to receive a threaded insert. Similarly, at least a portion of the second actuator body part 620 is provided with a thread. The second actuator body part 620 can be threadably inserted into the boring 630 of the first body part 610 to facilitate coupling of the first actuator body part 610 and the second actuator body part 620. While the first actuator body part 610 and the second actuator body part 620 are depicted as cylindrical in Fig. 25, it is to be appreciated that any suitable shape for the first actuator body part 610 and/or the second actuator body part 620 can be employed in the invention.

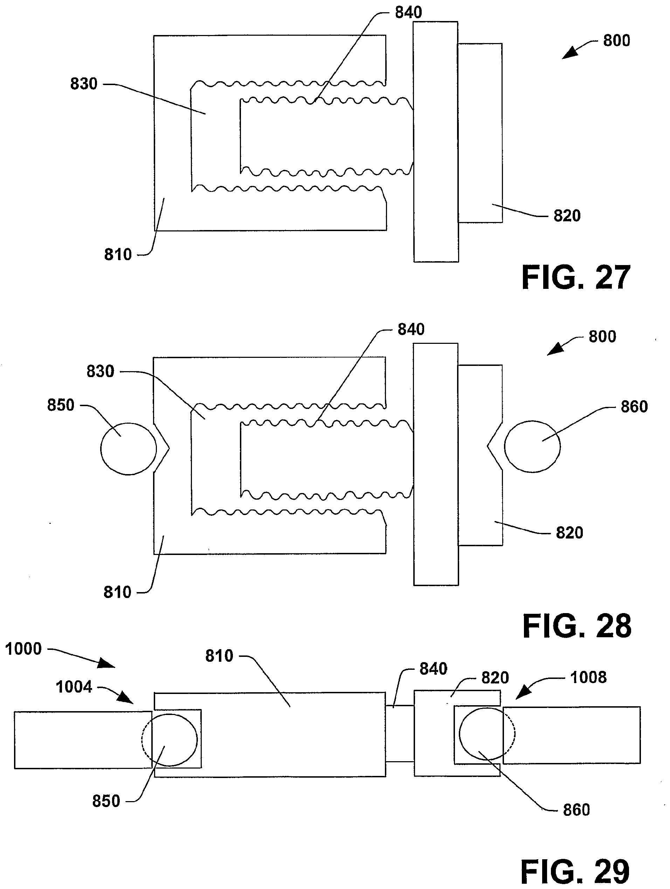

Turning next to Fig. 27, an embodiment of an actuator 800 in accordance with an aspect of the present invention is illustrated. The actuator 800 includes a first actuator body part 810 and a second actuator body part 820. Fig. 27 illustrates an embodiment of a compressive-state actuator in which the length of the actuator 800 can be adjusted. The first actuator body part 810 includes a boring 830 through at least part of the first actuator body part 810. The first actuator body part 810 has a first coefficient of thermal expansion.

The second actuator body part 820 includes a threaded portion 840. The second actuator body part 820 has a second coefficient of thermal expansion. In this embodiment, the threaded portion 840 of the second actuator body part 820 is inserted into at least a portion of the boring 830 of the first actuator body part 810 to facilitate coupling of the first actuator body part 810 and the second actuator body part 820. In one example, once a desired amount of the second actuator body part 820 has been inserted into the boring 830, the first actuator body part 810 and the second actuator body part 820 can be coupled. Operating characteristics (*e.g.,* overall tension and/or compression) of the actuator 800 can be based, at least in part, upon the amount of the threaded portion 840 of the second actuator body party 820 inserted into the boring 830. For example, if the first coefficient of thermal expansion is different than the second coefficient of thermal expansion, the overall thermal characteristics of the actuator 800 is based, at least in part, upon the amount of threaded portion 840 of the second actuator body part 820 inserted into the boring 830.

Referring briefly to Fig. 28, another embodiment of the actuator 800 depicted in Fig. 27 is illustrated. In this embodiment, the first actuator body part 810 is adapted to receive a first contact piece 850. The second actuator body part 820 can similarly be adapted to receive a second contact piece 860.

The first contact piece 850 and/or the second contact piece 860 can comprise, for example, a hard metal (*e.g.,* stainless steel) sphere or, alternatively, a hard metal cylinder. It is to be appreciated that the first contact piece 850 and/or the second contact piece 860 can comprise any suitable material and/or geometry. The first contact piece 850 and/or the second contact piece 860 can be detachable from the remainder of the actuator 800 (*e.g.,* not permanently coupled to the first actuator body part 810 and/or the second actuator body part 820).

Turning briefly to Fig. 29, a cross section view of an OIC 1000 having a first contact region 1004 and a second contact region 1008 is illustrated. The OIC 1000 further employs an actuator 800, a first contact piece 850 and a second contact piece 860.

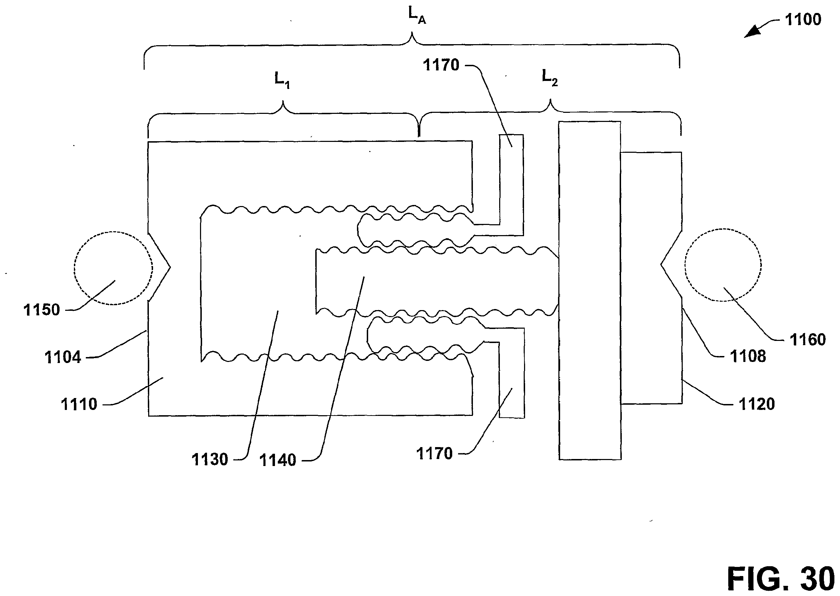

Referring next to Fig. 30, an actuator 1100 in accordance with an aspect of the present invention is illustrated. The actuator 1100 is one embodiment of a compressive-state actuator having both its length, $L_A$, and its coefficient of thermal expansion (CTE) independently adjustable. The actuator 1100 has a first end 1104 and a second end 1108. In this embodiment, the actuator 1100 includes a first actuator body part 1110 and a second actuator body party 1120. The first actuator body part 1110 includes a boring 1130 through at least part of the first actuator body part 1110. The first actuator body part 1110 has a first coefficient of thermal expansion ($CTE_1$).

The second actuator body part 1120 includes a threaded portion 1140. The second actuator body part 1120 has a second coefficient of thermal expansion ($CTE_2$). The actuator 1100 further comprises a ring 1170 that has a third coefficient of thermal expansion ($CTE_3$). The ring 1170 can comprise any suitable material, for example copper. The ring 1170 can be threadably coupled to the threaded portion 1140 of the second actuator body part 1120. The threaded portion 1140 of the second actuator body part 1120 and the ring 1170 can then be threadably coupled to the first actuator body part 1110.

The first actuator body part 1110 and the second actuator body part 1120 can comprise materials with different coefficients of thermal expansion. For example, the first actuator body part 1110 can be constructed from steel and the second actuator body part 1120 can be constructed from aluminum. The effective coefficient of thermal expansion ($CTE_A$) of the actuator 1100 is related to $CTE_1$ and the $CTE_2$, and can be approximated by:

$$L_A \times CTE_A \cong (L_1 \times CTE_1) + (L_2 \times CTE2)$$

where $L_1$ is the distance from the threads of the ring 1170 to the first end 1104, $L_2$ is the distance from the threads of the ring 1170 to the second end 1108, and $L_A$ is the length of the actuator ($L_A=L_1+L_2$). Typically, the coefficient of the ring 1170 ($CTE_3$) has less of an impact on $CTE_A$ than does $CTE_1$ and $CTE_2$.

For example, during manufacturing, the ring 1170 is threaded into the first actuator body part 1110 and the threaded portion 1140 of the second actuator body part is threaded into the ring 1170. $CTE_A$ can be adjusted (e.g., without affecting the length, $L_A$, of the actuator) by rotating the ring 1170 relative to the first actuator body part 1110 and relative to the threaded portion 1140 while the threaded portion 1140 does not rotate relative to the first actuator body part 1110. Rotating the ring 1170 thus moves the threads of the ring 1170 either closer to the first end 1104 of the actuator 1110 or closer to the second end 1108 of the actuator 1100. As the threads of the ring 1170 approach the first end 1104, $CTE_A$ becomes closer in value to $CTE_2$ (*e.g.*, CTE of the second actuator body part 1120). Conversely, as the threads of the ring 1170 approach the second end 1108, $CTE_A$ becomes closer in value to $CTE_1$.

The length of the actuator, $L_A$, can be changed by rotating the threaded portion 1140 and the first actuator body part 1110 relative to the ring 1170 in any manner that is not equivalent to the rotation described above for adjusting the $CTE_A$. For example, $L_A$ can be adjusted by holding the ring 1170 and the first actuator body party 1110 together without relative rotation, while rotating the threaded portion 1140 in the ring 1170. By rotating the threaded portion 1140 and the first actuator body part 1110 relative to the ring 1170 at an appropriate ratio, $L_A$ can be adjusted without significantly affecting the $CTE_A$ of the actuator. Based on the approximation regarding $CTE_A$, described previously, if the rotation angle of the threaded portion 140, $a_1$, and the rotation angle of the first actuator body part, $a_2$, are related by:

$$a_1/a_2 \cong CTE_2/CTE_1$$

$L_A$ can be changed without significantly affecting $CTE_A$.

In one embodiment, the first actuator body part 1110 can be adapted to receive a first contact piece 1150. Additionally, the second actuator body part 1120 can similarly be adapted to receive a second contact piece 1160. The first contact piece 1150 and/or the second contact piece 1160 can be detachable from the remainder of the actuator 1100 (e.g., not permanently coupled to the first actuator body part 1110 and/or the second actuator body part 1120).

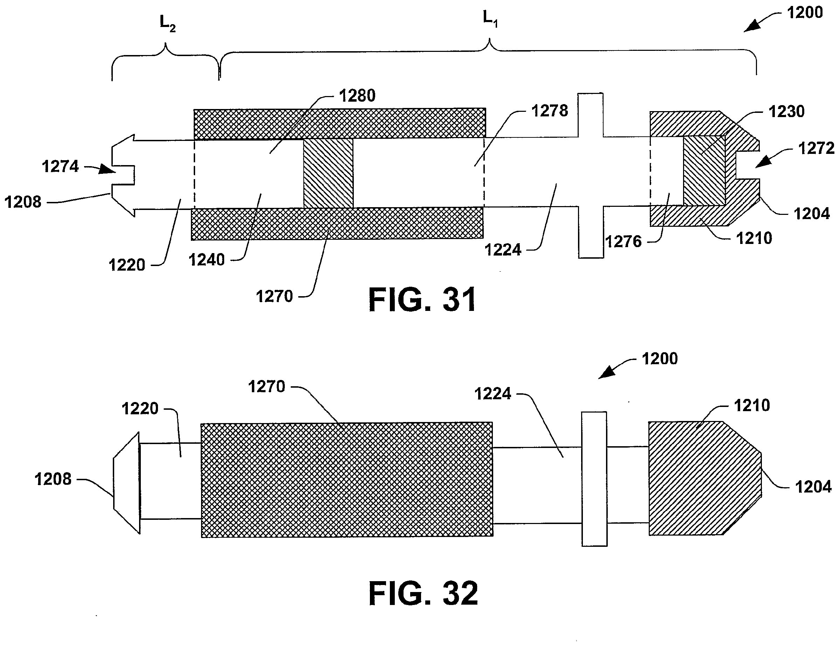

Turning to Fig. 31, an actuator 1200 in accordance with an aspect of the present invention is illustrated. The actuator 1200 is one embodiment of a compressive-state actuator having both its length, $L_A$, and its coefficient of thermal expansion (CTE) independently adjustable. The actuator 1200 has a first end 1204 and a second end 1208. In this embodiment, the actuator 1200 includes a first actuator body part 1210, a second actuator body part 1220 and a third actuator body part 1224. The first actuator body part 1210 includes a boring 1230 through at least part of the first actuator body part 1210. The first actuator body part 1210 has a first coefficient of thermal expansion ($CTE_1$).

The second actuator body part 1220 includes a threaded portion 1240. The second actuator body part 1220 has a second coefficient of thermal expansion ($CTE_2$). The actuator 1200 further comprises a nut 1270 that has a third coefficient of thermal expansion ($CTE_3$).

The nut 1270 can comprise any suitable material, for example copper.

The third actuator body part 1224 includes a threaded portion 1278. The third actuator body part 1224 has a fourth coefficient of thermal expansion $CTE_4$. In one example, the first actuator body part 1210, the third actuator body part 1224 and the nut 1270 are made of a first material (e.g., magnesium) and the second actuator body part 1220 is made with a second material (e.g., Invar - a commercial grade of steel) that has a CTE that is different from the first material. In another example, the first end 1204 and/or the second end 1208 include slots 1272, 1274, for example, to straddle an OIC. By straddling the chip, the slots can facilitate maintaining the actuator 1200 in its intended position (e.g., between a first contact location and a second contact). Additionally, contact pieces (not shown) can be recessed into the slots 1272, 1274 respectively.

After the actuator 1200 is installed so that the slots 1272, 1274 straddle the OIC, neither the second actuator body part 1220 nor the first actuator body part 1210 are free to rotate relative to the OIC. Consequently, the second actuator body part 1220 cannot be rotated relative to the first actuator body part 1210 after the actuator is installed. The third actuator body part 1224 can have a differential thread. For example, the third actuator body part 1230 can be threaded with a 72 threads per inch (t.p.i.) right handed thread at a first end 1276 and threaded with an 80 t.p.i. right handed thread at a second end 1278. The second actuator body part 1220 can be threaded (e.g., an 80 t.p.i. right-handed thread) at one end 1280.

The length of the actuator 1200 can be adjusted by holding the first actuator body part 1210, nut 1270 and second actuator body part 1220 such that they do not rotate relative to each other and rotating the third actuator body part 1230 relative to the first actuator body part 1210. Because the threads at the first end 1276 are coarser than the threads at the second end 1278, the third actuator body part 1230 is translated relative to the first actuator body part 1210 faster than it is translated relative to the second actuator body part 1220. The length adjustment provided by the rotation of the third body part 1230 is a fine adjustment (e.g., the rate of adjustment can be approximately 0.0014 inches per full turn of the nut). When the length is adjusted in this manner, $CTE_A$ of the actuator is not affected.

The $CTE_A$ of the actuator 1200 can be adjusted by holding the first actuator body part 1210, third actuator body part 1230 and second actuator body part 1220 such that they do not rotate relative to each other and rotating the nut 1270 relative to the third actuator body part 1230. $CTE_A$ is related to $CTE_1$, $CTE_2$, $CTE_3$ and $CTE_4$; however, in the instance where the first actuator body part 1210, the third actuator body part 1224 and the nut 1270 are made of the same or similar material, $CTE_A$ can be approximated as follows:

$$L \times CTE_A \cong (L_1 \times CTE_1) + (L_2 \times CTE_2)$$

where $L_1$ is the distance from the gripping-point of the threads of the second actuator body part 1220 to the first end 1204, $L_2$ is the distance from the gripping-point of the threads of the second actuator body part 1220 to the second end 1208, and L is the length of the actuator (e.g., L = L1 + L2). "Gripping-point" refers to a distance of about three threads from the end of the threads closest to the first end 1204. Fig. 32 illustrates a schematic top plan view of the actuator 1200.

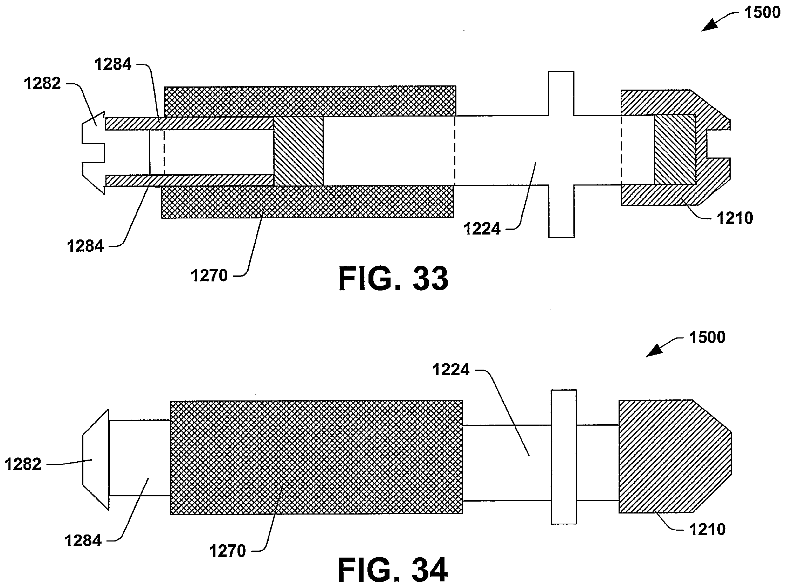

As illustrated in Fig. 33, an actuator 1500 can comprise a first actuator body part 1210, a third actuator body part 1224, a nut 1270, an end shaft 1284 and an end-ring 1282. In one example, the first actuator body part 1210, the third actuator body part 1224 and the nut 1270 are made of a first material (e.g., magnesium or aluminum) and the end-shaft 1284 is made with a second material (e.g., Invar or steel) that has a CTE that is different from the first material.

The nut 1270, third actuator body part 1224 and first actuator body part 1210 can be configured similar to those of the actuator 1200. The end shaft 1284 is not threaded and is held in position by the end ring 1282, which is threaded into the nut 1270. Rotating the third actuator body part 1224 adjusts the length of the actuator, L, as described for the actuator 1200. In addition, rotating the end-ring 1282 adjusts the length of the actuator 1500.

The end-ring 1282 and the end-shaft 1284 can be configured so that the end-ring 1282 can be rotated without rotating the end-shaft 1284, thus this length adjustment can be made while a slot in the end-shaft 1284 straddles the OIC. For example, the rate of length adjustment provided by this rotation can be approximately 0.0125 inches per full turn of the end-ring 1282. This is a coarser length adjustment than is provided by the nut 1270 and is suitable for accommodating length adjustments that are larger than can be provided by the rotation of the nut 1270.

Fig. 34 illustrates a schematic top plan view of the actuator 1500. For example, at least one first recessed blind hole 1286 can be formed on the end-ring 1282. A tool that is designed to hold the end-ring 1282 at the recessed hole(s) 1286 can be used to rotate the end-ring 1282 relative to the end-shaft 1284.

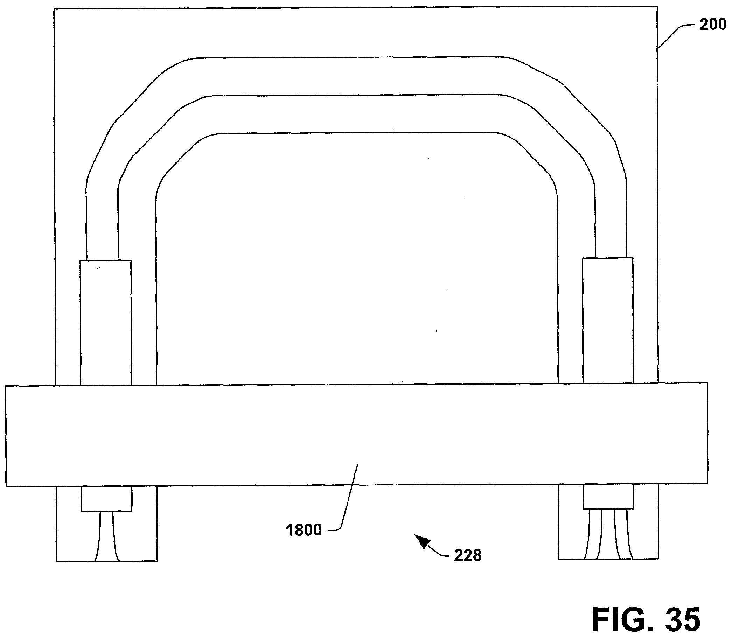

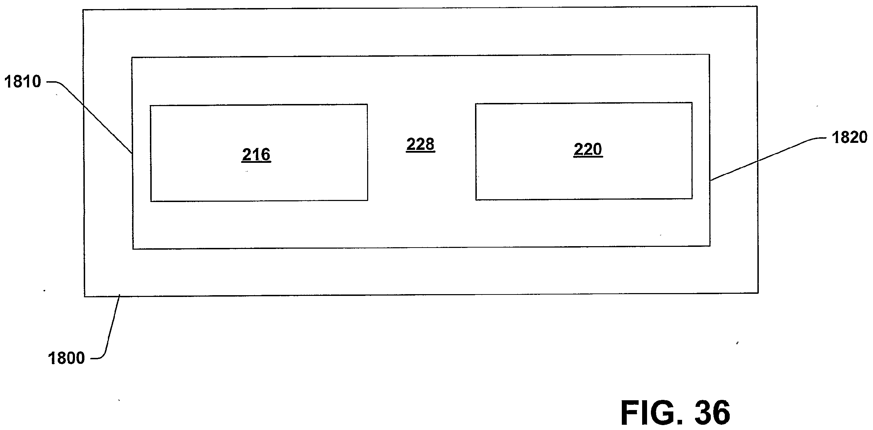

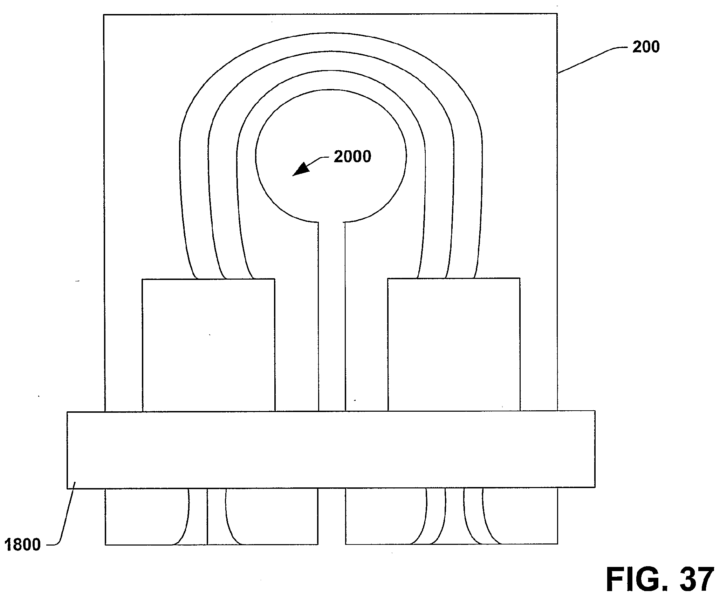

Referring next to Figs. 35 and 36, an actuator 1800 in accordance with an aspect of the present invention is illustrated. The actuator 1800 is one embodiment of a tensile-state actuator. In one example, the actuator 1800 contacts the OIC 200 at a first contact location 1810 and a second contact location 1820, both of which are outside of the gap 228. The length of the actuator 1800 is the distance between the first contact location 1810 and the second contact location 1820. The actuator 1800 typically remains in a state of tension over the entire operating temperature range of the OIC (e.g., applies a force that tends to pull the first region 216 towards the second region 220 over the entire operating temperature range). As with the compressive-state actuators, the length of the actuator 1800 increases as the temperature increases and the increased length can be configured to cancel the effect of the change in refractive index of the materials used for the OIC 200 that result from a change in temperature. Since the actuator 1800 does not require substantial rigidity, the actuator 1800 can have a smaller mass relative to compressive-state actuators. The actuator 1800, for example, can comprise a flexible metal band or a loop of wire. Fig. 37 depicts the actuator 1800 with an OIC 200 having a keyhole-cut shaped cut-out 2000.

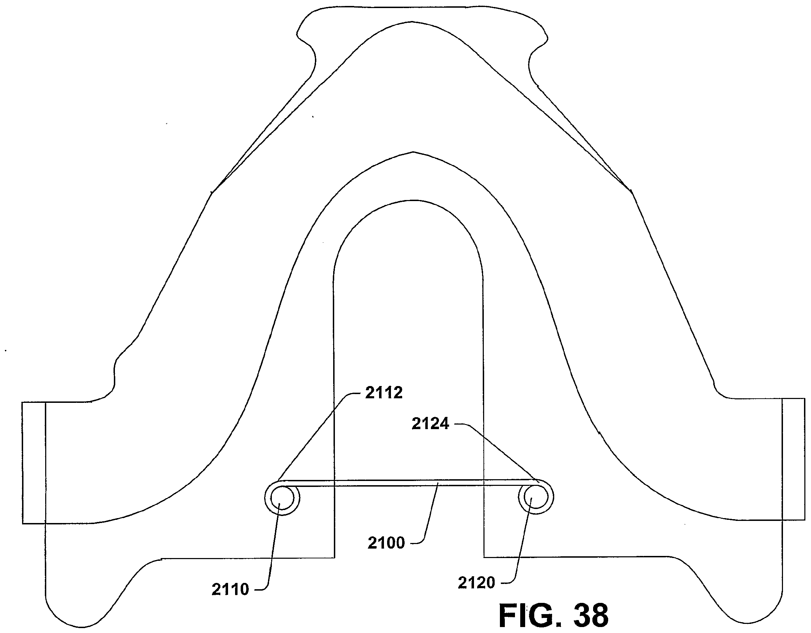

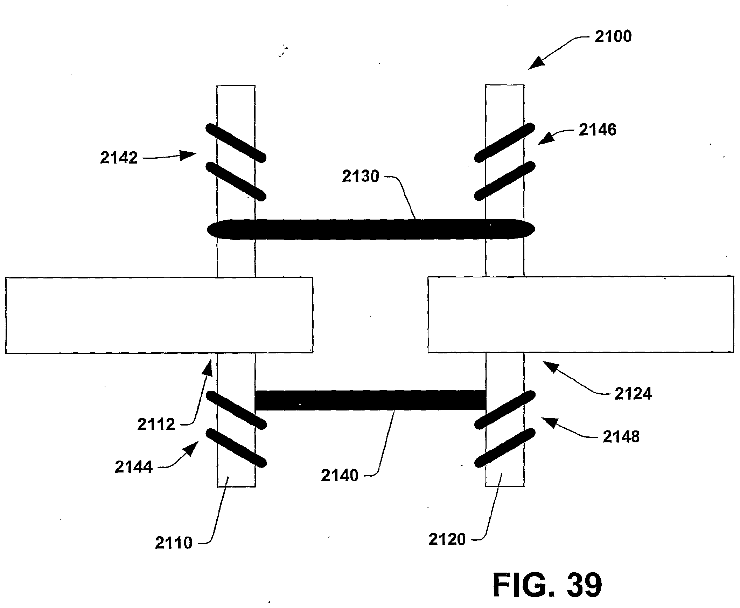

Turning to Figs. 38 and 39, an actuator 2100 in accordance with an aspect of the present invention is illustrated. The actuator 2100 is one embodiment of a tensile-state actuator. In this example, a first post 2110 extends through a hole 2112 (e.g., in the first region 216) and a second post 2120 extends through a hole 2124 (e.g., in the second region 220). The actuator 2100 comprises a first wire 2130 and a second wire 2140. The wires 2130, 2140 are attached to the posts 2110, 2120 with winding attachments 2142, 2144, 2146 and 2148, which can include soldering and/or crimping as part of securing the attachment. Windings 2142 and 2144 can be configured with opposing helicity so that no net torque is applied to the first post 2112. Windings 2146 and 2148 can be configured with opposing helicity so that no net torque is applied to the second post 2120.

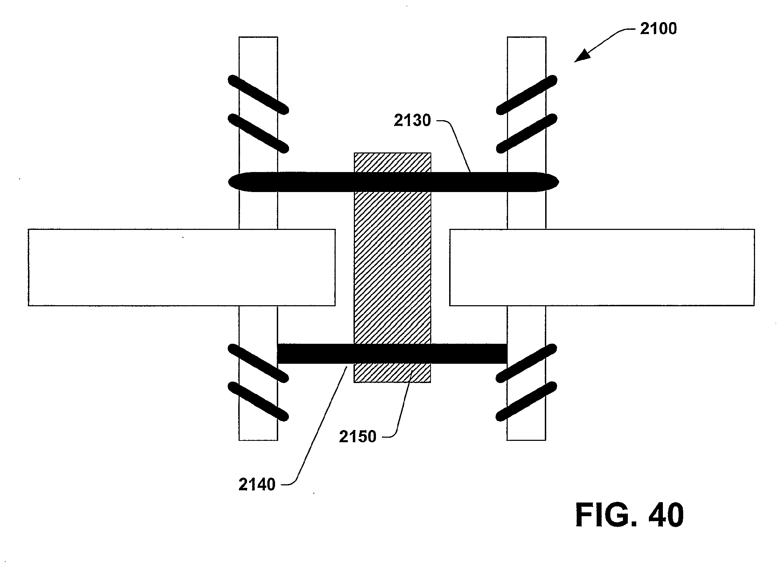

Referring to Fig. 40, the actuator 2100 can, optionally, include a clamp 2150. The clamp 2150 can be configured so as to provide a method of adjusting the length of the actuator 2100. For example, crimping the clamp 2150, may draw the middle of the first wire 2130 closer to the middle of the second wire 2140, thus increasing the tension in the wires 2130, 2140 and thereby shortening the distance between the first post 2110 and the second post 2120, (e.g., shortening the actuator 2100). The actuator 2100 can be realized with elements with low mass because they do not require a rigid structure, which is required to maintain a compressive state. An actuator with reduced mass can be preferred because components with larger mass have a higher risk of damaging the device (OIC) when the device is subjected to shock or vibration. Another advantage of a tensile-state actuator is that there is reduced risk of the forces becoming misaligned and causing out-of-plane deformations of either the first region 216 or the second region 220 (e.g., it reduces the risk of buckling of the chip).

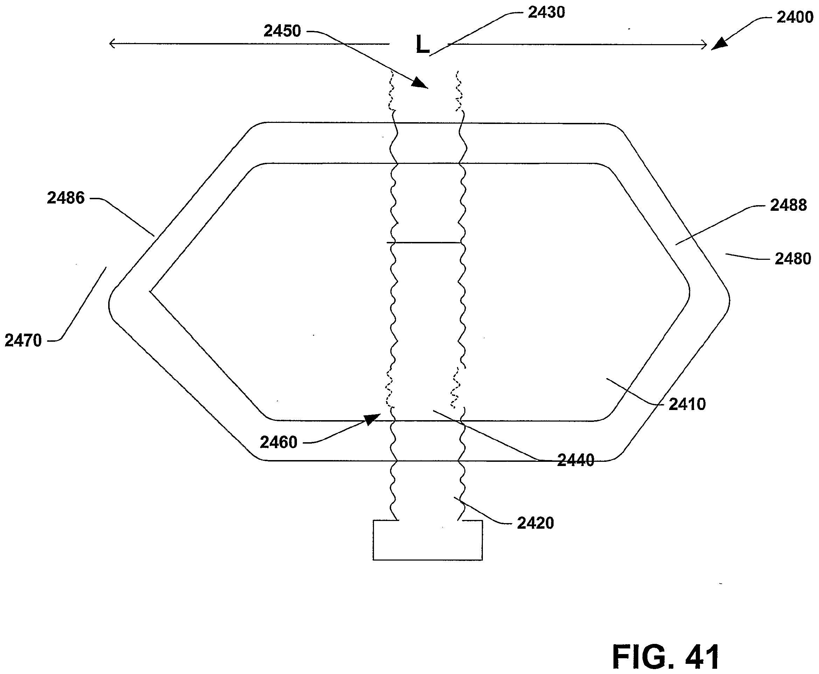

Turning to Fig. 41, an actuator 2400 in accordance with an aspect of the present invention is illustrated. The actuator 2400 includes a first actuator body 2410 and a second actuator body 2420. The second actuator body part 2420 can comprise a first threaded portion 2430 (e.g., right-handed thread) and a second threaded portion 2440 (left-handed thread). The first actuator body part comprises threaded bore sections 2450, 2460 to receive the first threaded portion 2430 and the second threaded portion 2440, respectively.

The length of the actuator 2400 is the distance between the first end 2470 and the second end 2480. Rotating the second actuator body part 2420 will translate the threaded bore section 2450 relative to the threaded bore section 2460 and consequently deform the actuator 2400 such that is length changes. The actuator 2400 can be employed as a compressive-state actuator with contact surfaces at locations 2470 and 2480. Alternatively, the actuator 2400 can be employed as a tensile-state actuator with contact surfaces at locations 2486 and 2488.

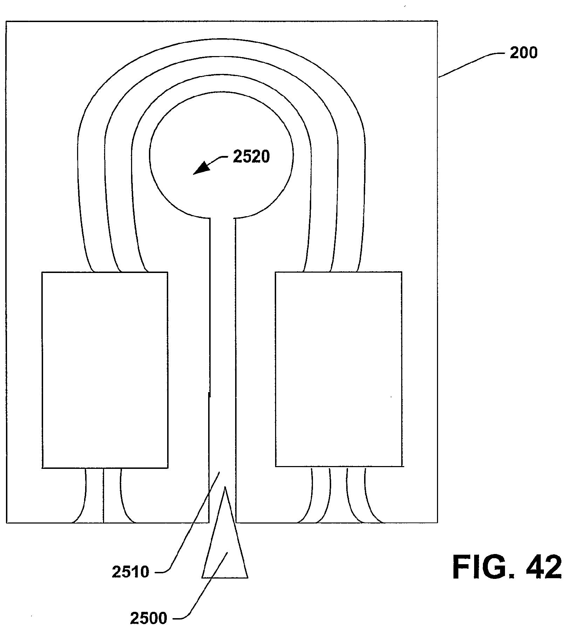

Referring to Fig. 42, an OIC 200 employing a wedge 2500 in accordance with an aspect of the present invention is illustrated. The wedge 2500 is inserted into a slot 2510 in the OIC 200. For example, the slot 2510 can be part of a keyhole cut-out 2520. In one example, a force is applied to and/or removed from the wedge 2500 *via* a force actuator (not shown). In another example, the wedge 2500 has a coefficient of thermal expansion. Thermal expansion and/or thermal contraction of the wedge 2500 can result in expansion and/or contraction force(s) applied to the slot 2510.

Another aspect of the invention provides methodologies for manufacturing an optical integrated circuit, wherein a base is provided having at least one waveguide in a first region and at least one waveguide in a second region. A connecting region connecting the first region and the second region is further provided. A first lens is provided in the connecting and the first region is scroll-diced from the second region. Alternatively, the first region can be separated from the second region (*e.g.*, beyond the lens - excluding the lens) by patterned etching of the base. An actuator is provided between the first region and the second region.

Although the invention is shown and described with respect to certain illustrated implementations, it will be appreciated that equivalent alterations and modifications will occur to others skilled in the art upon the reading and understanding of this specification and the annexed drawings. In particular regard to the various functions performed by the above described components (assemblies, devices, systems, etc.), the terms (including a reference to a "means") used to describe such components are intended to correspond, unless otherwise indicated, to any component which performs the specified function of the described component (e.g., that is functionally equivalent), even though not structurally equivalent to the disclosed structure, which performs the function in the herein illustrated exemplary aspects of the invention.

**Claims**

**1.** An optical integrated circuit, comprising:

a base (10, 60) having a first thermal expansion coefficient, the base (10, 60) comprising a first region (11, 61) and a second region (13, 63));
an arrayed waveguide chip (16, 66) over the base, the arrayed waveguide chip comprising a lens (50, 70), a waveguide grating optically coupled to the lens (50, 70), and a groove (48, 68) traversing one of the lens (50, 70) and the waveguide grating, said groove being filled with an index matching substance and
an actuator (12, 62) having a second thermal expansion coefficient, the actuator (12, 62) connecting the first region and the second region of the base,
wherein the second thermal expansion coefficient is different from the first thermal expansion coefficient;
**characterized in that**

said first and second regions are separated by a hinge (14, 64), and the portion of said arrayed waveguide chip (16, 66) on one side of the groove (48, 68) is supported by said first region and the portion of said arrayed waveguide chip (16, 66) on the other side of the groove (48, 68) is supported by said second region; and said index matching substance is selected from an adhesive, a gel or a polymer.

**2.** The optical integrated circuit of claim 1, wherein the second thermal expansion coefficient is less than the first thermal expansion coefficient.

**3.** The optical integrated circuit of claim 1, wherein the second thermal expansion coefficient is greater than the first thermal expansion coefficient.

**4.** The optical integrated circuit of claim 1, wherein the actuator (12, 62) is one of a piezoelectric element, an electrostrictive actuator, a solenoid, and an electric motor.

**5.** The optical integrated circuit of claim 1, wherein the groove (48, 68) traverses the waveguide grating.

**6.** The optical integrated circuit of claim 5, wherein the groove (48, 68) comprises a waveplate.

**7.** The optical integrated circuit of claim 1, wherein the groove (48, 68) traverses the lens.

**8.** The optical integrated circuit of claim 1, wherein the groove (48, 68) has a width of about 1 micron or more and about 50 microns or less.

**9.** The optical integrated circuit of claim 1, wherein the groove (48, 68) completely traverses the arrayed waveguide chip (16, 66).

**10.** The optical integrated circuit of claim 1, wherein the arrayed waveguide chip (16, 66) comprises at least one input waveguide optically coupled to a first lens (50, 70), at least one output waveguide optically coupled to a second lens (76), the waveguide grating optically coupled to the first lens and the second lens, and the groove traverses one of the first lens, the second lens, and the waveguide grating.

11. The optical integrated circuit of claim 1, wherein the difference between the second thermal expansion coefficient and the first thermal expansion coefficient is at least 100%.

12. The optical integrated circuit of claim 1, wherein the groove has a width of about 3 microns or more and about 30 microns or less.

13. A method of making an optical integrated circuit according to Claims 1-12, the method comprising:

providing a base (10, 60) having a first thermal expansion coefficient, the base (10, 60) shaped to comprise a first region (11, 61) and a second region (13, 63) separated by a hinge; attaching an arrayed waveguide chip (16, 66) to the base (10, 60), the arrayed waveguide chip (16, 66) comprising a lens (50, 70), and a waveguide grating optically coupled to the lens (50, 70); forming a groove (48, 68) in the arrayed waveguide chip (16, 66), the groove traversing one of the lens (50, 70) and the waveguide grating; and attaching an actuator (12, 62) having a second thermal expansion coefficient to the base, the actuator (12, 62) connecting the first region and the second region of the base (10, 60), wherein the second thermal expansion coefficient is different from the first thermal expansion coefficient.

**Patentansprüche**

1. Integrierte-Optik-Schaltung, die Folgendes umfasst: eine Basis (10, 60), die einen ersten Wärmeausdehnungskoeffizienten aufweist, wobei die Basis (10, 60) eine erste Region (11, 61) und eine zweite Region (13, 63) umfasst:

einen Arrayed-Wellenleiter-Chip (16, 66) über der Basis, wobei der Arrayed-Wellenleiter-Chip eine Linse (50, 70), ein optisch mit der Linse (50, 70) gekoppeltes Wellenleitergitter und eine Furche (48, 68), die die Linse (50, 70) oder das Wellenleitergitter überquert, umfasst, wobei die Furche mit einer Indexanpassungssubstanz gefüllt ist, und einen Aktuator (12, 62), der einen zweiten Wärmeausdehnungskoeffizienten aufweist, wobei der Aktuator (12, 62) die erste Region und die zweite Region der Basis verbindet, wobei sich der zweite Wärmeausdehnungskoeffizient von dem ersten Wärmeausdehnungskoeffizienten unterscheidet; **dadurch gekennzeichnet, dass**
die erste und die zweite Region durch ein Scharnier (14, 64) getrennt sind und der Teil des Arrayed-Wellenleiter-Chips (16, 66) auf einer Seite der Furche (48, 68) durch die erste Region getragen wird und der Teil des Arrayed-Wellenleiter-Chips (16, 66) auf der anderen Seite der Furche (48, 68) durch die zweite Region getragen wird; und die Indexanpassungssubstanz aus einem Klebstoff, einem Gel oder einem Polymer ausgewählt ist.

2. Integrierte-Optik-Schaltung nach Anspruch 1, wobei der zweite Wärmeausdehnungskoeffizient niedriger als der erste Wärmeausdehnungskoeffizient ist.

3. Integrierte-Optik-Schaltung nach Anspruch 1, wobei der zweite Wärmeausdehnungskoeffizient größer als der erste Wärmeausdehnungskoeffizient ist.

4. Integrierte-Optik-Schaltung nach Anspruch 1, wobei der Aktuator (12, 62) ein piezoelektrisches Element oder ein elektrostriktiver Aktuator oder ein Solenoid oder ein Elektromotor ist.

5. Integrierte-Optik-Schaltung nach Anspruch 1, wobei die Furche (48, 68) das Wellenleitergitter überquert.

6. Integrierte-Optik-Schaltung nach Anspruch 5, wobei die Furche (48, 68) eine Wellenplatte umfasst.

7. Integrierte-Optik-Schaltung nach Anspruch 1, wobei die Furche (48, 68) die Linse überquert.

8. Integrierte-Optik-Schaltung nach Anspruch 1, wobei die Furche (48, 68) eine Breite von etwa 1 Mikron oder mehr und etwa 50 Mikron oder weniger aufweist.

9. Integrierte-Optik-Schaltung nach Anspruch 1, wobei die Furche (48, 68) den Arrayed-Wellenleiter-Chip (16, 66) vollständig überquert.

10. Integrierte-Optik-Schaltung nach Anspruch 1, wobei der Arrayed-Wellenleiter-Chip (16, 66) mindestens einen optisch mit einer ersten Linse (50, 70) gekoppelten Eingangswellenleiter, mindestens einen optisch mit einer zweiten Linse (76) gekoppelten Ausgangswellenleiter umfasst, wobei das Wellenleitergitter optisch an die erste Linse und die zweite Linse gekoppelt ist, und die Furche die erste Linse oder die zweite Linse oder das Wellenleitergitter überquert.

**11.** Integrierte-Optik-Schaltung nach Anspruch 1, wobei die Differenz zwischen dem zweiten Wärmeausdehnungskoeffizienten und dem ersten Wärmeausdehnungskoeffizienten mindestens 100% beträgt.

**12.** Integrierte-Optik-Schaltung nach Anspruch 1, wobei die Furche eine Breite von etwa 3 Mikron oder mehr und etwa 30 Mikron oder weniger aufweist.

**13.** Verfahren zum Herstellen einer Integrierte-Optik-Schaltung nach Ansprüchen 1-12, wobei das Verfahren Folgendes umfasst:

Bereitstellen einer Basis (10, 60), die einen ersten Wärmeausdehnungskoeffizienten aufweist, wobei die Basis (10, 60) so ausgestaltet ist, eine erste Region (11, 61) und eine zweite Region (13, 63), die durch ein Scharnier getrennt sind, zu umfassen;
Anbringen eines Arrayed-Wellenleiter-Chips (16, 66) an der Basis (10, 60), wobei der Arrayed-Wellenleiter-Chip (16, 66) eine Linse (50, 70) und ein optisch mit der Linse (50, 70) gekoppeltes Wellenleitergitter umfasst; Ausbilden einer Furche (48, 68) in dem Arrayed-Wellenleiter-Chip (16, 66), wobei die Furche die Linse (50, 70) oder das Wellenleitergitter überquert; und Anbringen eines Aktuators (12, 62), der einen zweiten Wärmeausdehnungskoeffizienten aufweist, an der Basis, wobei der Aktuator (12, 62) die erste Region und die zweite Region der Basis (10, 60) verbindet, wobei sich der zweite Wärmeausdehnungskoeffizient von dem ersten Wärmeausdehnungskoeffizienten unterscheidet.

## Revendications

**1.** Circuit intégré optique, comprenant :

une base (10, 60) ayant un premier coefficient de dilatation thermique, la base (10, 60) comprenant une première région (11, 61) et une seconde région (13, 63) ;
une puce de réseau sélectif planaire (16, 66) sur la base, la puce de réseau sélectif planaire comprenant une lentille (50, 70), un réseau sélectif planaire couplé optiquement à la lentille (50, 70), et une rainure (48, 68) traversant l'un de la lentille (50, 70) et du réseau sélectif planaire, ladite rainure étant remplie d'une substance d'adaptation d'indice et
un actionneur (12, 62) ayant un second coefficient de dilatation thermique, l'actionneur (12, 62) reliant la première région et la seconde région de la base,
le second coefficient de dilatation thermique étant différent du premier coefficient de dilatation thermique ;
**caractérisé en ce que**
lesdites première et seconde régions sont séparées par une charnière (14, 64), et la partie de ladite puce de réseau sélectif planaire (16, 66) d'un côté de la rainure (48, 68) est supportée par ladite première région, et la partie de ladite puce de réseau sélectif planaire (16, 66) de l'autre côté de la rainure (48, 68) est supportée par ladite seconde région ; et ladite substance d'adaptation d'indice est choisie parmi un adhésif, un gel ou un polymère.

**2.** Circuit intégré optique selon la revendication 1, le second coefficient de dilatation thermique étant inférieur au premier coefficient de dilatation thermique.

**3.** Circuit intégré optique selon la revendication 1, le second coefficient de dilatation thermique étant supérieur au premier coefficient de dilatation thermique.

**4.** Circuit intégré optique selon la revendication 1, l'actionneur (12, 62) étant un élément parmi un élément piézoélectrique, un actionneur électrostrictif, un solénoïde et un moteur électrique.

**5.** Circuit intégré optique selon la revendication 1, la rainure (48, 68) traversant le réseau de guides d'ondes.

**6.** Circuit intégré optique selon la revendication 5, la rainure (48, 68) comprenant une plaque à ondes.

**7.** Circuit intégré optique selon la revendication 1, la rainure (48, 68) traversant la lentille.

**8.** Circuit intégré optique selon la revendication 1, la rainure (48, 68) ayant une largeur d'environ 1 micron ou plus et d'environ 50 microns ou moins.

**9.** Circuit intégré optique selon la revendication 1, la rainure (48, 68) traversant complètement la puce de réseau sélectif planaire (16, 66).

**10.** Circuit intégré optique selon la revendication 1, la puce de réseau sélectif planaire (16, 66) comprenant au moins un guide d'ondes d'entrée couplé optiquement à une première lentille (50, 70), au moins un guide d'ondes de sortie couplé optiquement à une seconde lentille (76), le réseau sélectif planaire étant couplé optiquement à la première lentille et à la seconde lentille, et la rainure traversant l'une de la première lentille, de la seconde lentille et du réseau sélectif planaire.

**11.** Circuit intégré optique selon la revendication 1, la différence entre le second coefficient de dilatation thermique et le premier coefficient de dilatation thermique étant d'au moins 100 %.

12. Circuit intégré optique selon la revendication 1, la rainure ayant une largeur d'environ 3 microns ou plus et d'environ 30 microns ou moins.

13. Procédé de fabrication d'un circuit intégré optique selon les revendications 1 à 12, le procédé comprenant :

la fourniture d'une base (10, 60) ayant un premier coefficient de dilatation thermique, la base (10, 60) étant conformée pour comprendre une première région (11, 61) et une seconde région (13, 63) séparées par une charnière ;
la fixation d'une puce de réseau sélectif planaire (16, 66) à la base (10, 60), la puce de réseau sélectif planaire (16, 66) comprenant une lentille (50, 70) et un réseau sélectif planaire couplé optiquement à la lentille (50, 70) ; la formation d'une rainure (48, 68) dans la puce de réseau sélectif planaire (16, 66), la rainure traversant l'une de la lentille (50, 70) et du réseau sélectif planaire ; et
la fixation d'un actionneur (12, 62) ayant un second coefficient de dilatation thermique à la base, l'actionneur (12, 62) reliant la première région et la seconde région de la base (10, 60), le second coefficient de dilatation thermique étant différent du premier coefficient de dilatation thermique.

(PRIOR ART)
FIG. 1

Fig.2

Fig.3

Fig.4

Fig.5

Fig.6

Fig.7

Fig.8

Fig.9

Fig.10

Fig.11

Fig.12

Fig.13

Fig.14

Fig.15

Fig.16

Fig.17

Fig.18

## Athermal AWG Temperature Response

Typical AWG without temperature controller

Athermal AWG

FIG. 19

EP 1 743 201 B1

**FIG. 20**

EP 1 743 201 B1

EP 1 743 201 B1

**FIG. 21**

EP 1 743 201 B1

416

420

400

412

410

**FIG. 22**

430

434

438

**FIG. 23**

**FIG. 24**

EP 1 743 201 B1

FIG. 25

FIG. 26

**FIG. 27**

**FIG. 28**

**FIG. 29**

FIG. 30

L₂  L₁  1200

1280

1278  1230

1274

1272

1208

1204

1220  1240  1276  1210

1270

## FIG. 31

1200

1270  1224  1210

1220

1208  1204

## FIG. 32

EP 1 743 201 B1

34

FIG. 33

FIG. 34

FIG. 35

EP 1 743 201 B1

1810

216

228

220

1820

1800

**FIG. 36**

**FIG. 37**

EP 1 743 201 B1

FIG. 38

EP 1 743 201 B1

FIG. 39

**FIG. 40**

EP 1 743 201 B1

FIG. 41

EP 1 743 201 B1

FIG. 42

**EP 1 743 201 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6668116 B2
- US 99969201
- US 6603892 B